# EUROPEAN PATENT APPLICATION

(11) **EP 4 586 654 A1**
(43) Date of publication of application: **16.07.2025**
(21) Application number: 23884560.6
(22) Date of filing: 11.10.2023
(51) Int. Cl.: H04W 4/029

(54) **COMMUNICATION METHOD AND COMMUNICATION APPARATUS**

(30) Priority: 02.11.2022 CN 202211359573; 13.02.2023 CN 202310145975; 17.04.2023 CN 202310433478
(71) Applicant: Huawei Technologies Co., Ltd., Shenzhen, Guangdong 518129 (CN)
(72) Inventor: LI, Jie, Shenzhen, Guangdong 518129 (CN); PENG, Wenjie, Shenzhen, Guangdong 518129 (CN)
(74) Representative: Goddar, Heinz J.
(86) International application number: PCT/CN2023/123907
(87) International publication number: WO 2024/093628

(57) **Abstract**

Embodiments of this application provide a method for updating a movement path and an apparatus. When a movement path of a terminal device is updated, indication information indicating that the movement path is updated or an updated movement path may be reported to an access network device in time, so that the access network device can obtain, in time, the information indicating that the movement path is updated, thereby optimizing a network configuration.

## Description

This application claims priorities to Chinese Patent Application No. 202211359573.4, filed with the China National Intellectual Property Administration on November 2, 2022 and entitled "COMMUNICATION METHOD AND COMMUNICATION APPARATUS", to Chinese Patent Application No. 202310145975.2, filed with the China National Intellectual Property Administration on February 13, 2023 and entitled "COMMUNICATION METHOD AND COMMUNICATION APPARATUS", and to Chinese Patent Application No. 202310433478.2, filed with the China National Intellectual Property Administration on April 17, 2023 and entitled "COMMUNICATION METHOD AND COMMUNICATION APPARATUS", which are incorporated herein by reference in their entireties.

### TECHNICAL FIELD

This application relates to the communication field, and more specifically, to a method for updating a movement path and an apparatus.

### BACKGROUND

When executing a corresponding task, for example, performing power network inspection, an uncrewed aerial vehicle (uncrewed aerial vehicle, UAV) may fly along a fixed path. Usually, when performing radio resource control (radio resource control, RRC) setup, RRC reestablishment, RRC reconfiguration, RRC resumption, or the like with a radio access network (radio access network, RAN), the UAV includes, in an RRC setup complete message, an RRC reestablishment complete message, an RRC resume complete message, or an RRC reconfiguration complete message in a RAN handover scenario, indication information indicating that information about a current flight path is available, and reports the message to the RAN. If a flight path of the UAV changes or is updated in a flight process, information indicating that the flight path changes or is updated cannot be reported to the RAN in time, and consequently, a decision-making error of the RAN may be caused.

### SUMMARY

Embodiments of this application provide a communication method. In the method, a terminal device may report an updated movement path in time, so that a network configuration can be performed in time and accurately.

According to a first aspect, a communication method is provided. The method may be performed by a terminal device, or may be performed by a component (for example, a processor, a chip, or a chip system) of the terminal device, or may be implemented by a logical module or software that can implement a part or all of functions of the terminal device. The method includes: The terminal device moves in a first time period based on a first movement path. The terminal device sends first information to a first access network device when the first movement path of the terminal device is updated. The first information indicates a second movement path, and the second movement path is used to adjust a network configuration.

In an implementation, the terminal device moves in the first time period based on the first movement path. The terminal device sends the first information to the first access network device when the first movement path of the terminal device is updated. The first information indicates the second movement path, and the second movement path is a movement path obtained by updating the movement path of the terminal device.

Specifically, the first information may be carried in a terminal device information response message (UEInfomationResponse). The first information may alternatively be a flight path report.

Specifically, that the second movement path is used to adjust the network configuration may be: monitoring a plurality of terminal devices based on the second movement path of the terminal device, to avoid collision between the terminal devices, or adjusting a beam direction of a base station based on the second movement path of the terminal device, and so on. The network configuration that needs to be adjusted is not limited in this application, and a network configuration performed by using the second movement path in this application falls within the protection scope of this application.

According to the foregoing method, when the movement path of the terminal device changes or is updated, the terminal device may report the updated movement path in time, so that the network configuration is performed in time and accurately.

With reference to the first aspect, in some implementations of the first aspect, before that the terminal device sends first information to a first access network device, the method further includes: The terminal device sends second information to the first access network device. The second information indicates that the first movement path is updated.

Specifically, the second information may be carried in a terminal device assistant message (UEAssistantInfomation) or a terminal device information response message (UEInformationResponse).

In addition, if the second movement path of the terminal device is canceled after the terminal device sends the second information to the first access network device, the terminal device may further indicate, to the first access network device, a movement path that needs to be executed subsequently, for example, indicate that the first movement path that is not updated continues to be executed. Alternatively, the terminal device may indicate, to the first access network device, that a flight task of the terminal device is canceled.

According to the foregoing method, when the movement path of the terminal device is updated, the terminal device may report, in time, indication information (namely, the second information) indicating that the movement path changes, to avoid a case in which the first access network device mistakenly determines a network configuration.

With reference to the first aspect, in some implementations of the first aspect, the method further includes: The terminal device receives third information sent by the first access network device. The third information indicates that the terminal device is allowed to report the second information.

Specifically, the third information may be carried in another configuration message (otherConfig).

Specifically, the second information may be spontaneously reported by the terminal device to the access network device after the movement path is updated, or may be reported based on a request of the access network device. This is not limited in this application.

Specifically, the first access network device may request, when there is a service requirement related to a network configuration, the terminal device to report the second information, or the first access network device may periodically request the terminal device to report the second information. This is not limited in this application.

According to the foregoing method, the access network device may request, as required, the terminal device to report the indication information indicating that the movement path is updated, so that the access network device does not receive the information when the terminal device does not need to report the indication information indicating that the movement path is updated, thereby reducing signaling overheads.

With reference to the first aspect, in some implementations of the first aspect, that the terminal device sends first information to a first access network device includes: The terminal device receives fourth information of the first access network device. The fourth information is used to request the terminal device to send the first information. The terminal device determines the first information based on the fourth information. The terminal device sends the first information to the first access network device.

Specifically, the fourth information may be carried in another configuration message (otherConfig) or a terminal device information request message (UEInformationRequest).

Specifically, the first information may be spontaneously reported by the terminal device to the access network device after the movement path is updated, or may be reported based on a request of the access network device. This is not limited in this application.

Specifically, the first access network device may request, when there is a service requirement related to a network configuration, the terminal device to report the first information, or the first access network device may periodically request the terminal device to report the first information. This is not limited in this application.

With reference to the first aspect, in some implementations of the first aspect, the method further includes: The terminal device receives sixth information from a second access network device. The sixth information is used to request the first information, and the second access network device is an access network device to which the terminal device is handed over. The terminal device sends the first information to the second access network device based on the sixth information.

Specifically, the sixth information may be included by the second access network device in a handover request acknowledge message for sending to the first access network device, and included by the first access network device in an RRC reconfiguration message for sending to the terminal device.

According to the foregoing method, when the terminal device is handed over from the first access network device to the second access network device, the terminal device may also send the first information to the second access network device based on a request of the second access network device.

With reference to the first aspect, in some implementations of the first aspect, that the first information indicates the second movement path specifically includes: The first information includes N bits, the second movement path includes P waypoints, and P bits in the N bits are in one-to-one correspondence with the P waypoints; and the first information may indicate the second movement path by using the N bits.

Specifically, the first movement path includes M waypoints, and each of the M waypoints corresponds to one bit. The method further includes: The terminal device determines at least one bit based on the P waypoints and the M waypoints. At least one waypoint corresponding to the at least one bit changes. The terminal device sets the at least one bit to a first value, and sets a bit other than the at least one bit in the N bits to a second value.

Specifically, the first value may be 1, and the second value may be 0. This is not limited in this application.

According to the foregoing method, the terminal device may report, to the first access network device, a waypoint that is in the second movement path obtained through the update and that changes in comparison with that in the first movement path that is not updated, so that the first access network device can obtain the second movement path, and signaling overheads can be further reduced.

Specifically, when P is equal to M, the P waypoints are in one-to-one correspondence with the M waypoints. The method is specifically: The terminal device determines at least one waypoint that is in the P waypoints and that changes in comparison with the M waypoints. The terminal device sets, to the first value, at least one bit that is in the P bits and that corresponds to the at least one waypoint, and sets a bit other than the at least one bit in the N bits to the second value.

Specifically, when P is less than M, a quantity of waypoints in the second movement path is reduced, and a 1^{st} waypoint that is in the first movement path and that is not in the second movement path is denoted as a first waypoint. The method further includes: The terminal device sets, to the first value, a bit corresponding to the first waypoint to a bit corresponding to an M^{th} waypoint in the first movement path, and sets, to the second value, a bit, in the N bits, other than the bit corresponding to the first waypoint to the bit corresponding to the M^{th} waypoint in the first movement path.

Specifically, when P is greater than M, a quantity of waypoints in the second movement path is increased, and a 1^{st} waypoint that is in the second movement path and that is not in the first movement path is denoted as a second waypoint. The method further includes: The terminal device sets, to the first value, a bit corresponding to the second waypoint to a bit corresponding to a P^{th} waypoint in the second movement path, and sets, to the second value, a bit, in the N bits, other than the bit corresponding to the second waypoint to the bit corresponding to the P^{th} waypoint in the second movement path.

Specifically, that the at least one waypoint changes includes at least one of the following: a waypoint location of the at least one waypoint changes, time at which the terminal device arrives at the at least one waypoint changes, an order of the at least one waypoint changes, the at least one waypoint corresponding to the at least one bit is deleted from the second movement path, the at least one waypoint corresponding to the at least one bit is added to the second movement path, and so on.

Specifically, a value of N may be a maximum value of a quantity of waypoints that can be included in the first movement path or the second movement path, and in this case, the value of N is a fixed value. Alternatively, when P is equal to M or P is less than M, a value of N may be M, and in this case, the value of N is determined based on a value of M and is variable; or when P is greater than M, a value of N may be P, and in this case, the value of N is determined based on a value of P and is also variable.

With reference to the first aspect, in some implementations of the first aspect, the first information further includes an index of one or more waypoints corresponding to a bit set to the first value, and the index is used to query information about the one or more waypoints in the first movement path.

Each bit set to the first value corresponds to an index of a waypoint or information about the waypoint.

According to the foregoing method, when a bit corresponding to a specific waypoint that is in the second movement path obtained through the update in comparison with that in the first movement path that is not updated changes, but waypoint information of the waypoint does not change, the terminal device does not need to report the waypoint information of the waypoint again, so that signaling overheads can be reduced.

With reference to the first aspect, in some implementations of the first aspect, the fourth information or the sixth information is further used to request the terminal device to report a part that is of the second movement path and that is different from the first movement path.

The part that is of the second movement path and that is different from the first movement path is reported, so that the second movement path obtained through the update can also be indicated to the access network device, and resource occupation can be further reduced.

With reference to the first aspect, in some implementations of the first aspect, the first movement path or the second movement path includes at least one waypoint, the waypoint indicates a movement location of the terminal device on the first movement path or the second movement path, and the fourth information or the sixth information includes at least one of the following information about the second movement path:
a start point, an end point, a quantity of waypoints, waypoint distribution, a waypoint interval, an acceleration status or a deceleration status at the waypoint, hovering time at the waypoint, a hovering speed at the waypoint, an average speed between the start point and the end point, a distance between the start point and the end point, quantities of waypoints corresponding to distances between different start points and end points, an average speed between two adjacent waypoints, a distance between two adjacent waypoints, and the like.

For example, the quantities of waypoints corresponding to the distances between the different start points and end points may be as follows: When a distance between a start point and an end point is 1 kilometer, the second movement path includes at least two waypoints; or when a distance between a start point and an end point is 2 kilometers, the second movement path includes at least three waypoints. A specific corresponding value is not limited in this application.

The terminal device indicates, by including the foregoing information, the second movement path or the first movement path based on the foregoing required information. In this way, the second movement path or the first movement path reported by the terminal device is more easily and accurately identified by the access network device.

With reference to the first aspect, in some implementations of the first aspect, the first information further indicates that the second movement path is estimated or accurate.

Specifically, the first information may further indicate an estimated waypoint in at least one waypoint included in the second movement path and/or an accurate waypoint in the at least one waypoint included in the second movement path.

The second movement path generated by the terminal device based on the fourth information or the sixth information may not be unique. Therefore, the terminal device may estimate a part of the second movement path. Alternatively, the second movement path generated by the terminal device based on the fourth information or the sixth information may be unique. Therefore, the terminal device indicates, to the access network device, information indicating that the second movement path is estimated or accurate. This facilitates a network configuration.

With reference to the first aspect, in some implementations of the first aspect, the second information further indicates the average speed at which the terminal device moves between the start point and the end point of the second movement path; or the second information further indicates the distance that the terminal device moves between the start point and the end point of the second movement path; or the second information further indicates the average speed at which the terminal device moves between two adjacent waypoints in the second movement path; or the second information further indicates the distance that the terminal device moves between two adjacent waypoints in the second movement path.

In addition, the second information may further indicate an emergency landing point in at least one waypoint included in a second flight path.

The foregoing information is indicated to the access network device, so that the access network device can be assisted in further determining whether the terminal device moves along a straight line or a curve, or moves in another manner.

With reference to the first aspect, in some implementations of the first aspect, the second information includes at least one of the following information:
a quantity of updated waypoints, the updated waypoint, a proportion of the updated waypoints, a quantity of waypoints where arrival time of the terminal device changes, the waypoint where arrival time of the terminal device changes, a proportion of the waypoints where the arrival time of the terminal device changes, a maximum location deviation of the terminal device arriving at the waypoint, and a maximum time deviation of the terminal device arriving at the waypoint.

Specifically, the quantity of updated waypoints is a quantity of changed waypoints as indicated by the terminal device to the first access network device. The updated waypoints are changed waypoints as indicated by the terminal device to the first access network device. The proportion of the changed waypoints may be a proportion of changed waypoints as indicated by the terminal device to the first access network device, the proportion of the changed waypoints may be a proportion of the quantity of changed waypoints to a total quantity of waypoints in the first movement path of the terminal device, or the proportion of the changed waypoints may be a proportion of the quantity of changed waypoints of the terminal device to a quantity of remaining waypoints of the terminal device during movement. The quantity of waypoints where the arrival time of the terminal device changes is a quantity of waypoints where arrival time of the terminal device changes, as indicated by the terminal device to the first access network device. The waypoints where the arrival time of the terminal device changes are waypoints where arrival time of the terminal device changes, as indicated by the terminal device to the first access network device. The proportion of the waypoints where the arrival time of the terminal device changes is a proportion of waypoints where arrival time of the terminal device changes, as indicated by the terminal device to the first access network device. The maximum location deviation of the terminal device arriving at the waypoint is a maximum deviation between a location of the changed waypoint as indicated by the terminal device to the first access network device and an original location of the waypoint. The maximum time deviation of the terminal device arriving at the waypoint is a maximum deviation between arrival time at the changed waypoint as indicated by the terminal device to the first access network device and original arrival time at the waypoint.

According to the foregoing method, the first access network device can more accurately determine, based on information provided by the terminal device, whether to indicate the terminal device to update the movement path, so that useless movement path update triggered by the first access network device can be reduced.

With reference to the first aspect, in some implementations of the first aspect, the second information further includes at least one of the following information:
a speed, a height, or a location of the terminal device when the terminal device sends the second information.

Based on the foregoing solution, the first access network device may configure corresponding threshold information based on information such as the speed, the height, or the location of the terminal device that is provided by the terminal device, so that the terminal device more accurately determines whether an updated movement path needs to be reported.

With reference to the first aspect, in some implementations of the first aspect, the method further includes: The terminal device receives seventh information from the first access network device. The seventh information includes at least one of the following information:
a first threshold of the quantity of updated waypoints, a waypoint specified by the first access network device, a second threshold of the proportion of the updated waypoints, a third threshold of the quantity of waypoints where the arrival time of the terminal device changes, the waypoint where the arrival time of the terminal device changes, a fourth threshold of the proportion of the waypoints where the arrival time of the terminal device changes, a first location deviation of the terminal device arriving at the waypoint, a first area of the waypoint at which the terminal device arrives, a first time deviation of the terminal device arriving at the waypoint, and load statuses of the first access network device in different time periods. The first area is used to limit a range of an area, of the waypoint, at which the terminal device arrives.

The first access network device sends the seventh information to the terminal device, to limit a condition for the terminal device to report that a movement path is updated. The terminal device triggers the movement path update only when determining that a movement path to be updated satisfies the seventh information, thereby reducing a frequency of updating the movement path by the terminal device and saving air interface resources.

With reference to the first aspect, in some implementations of the first aspect, the method further includes: The terminal device sends the first movement path. The seventh information is received after the terminal device sends the first movement path.

According to a second aspect, a communication method is provided. The method may be performed by a first access network device, or may be performed by a component (for example, a processor, a chip, or a chip system) of the first access network device, or may be implemented by a logical module or software that can implement a part or all of functions of the first access network device. The method includes: The first access network device adjusts a network configuration based on a first movement path of a terminal device. The first access network device receives first information sent by the terminal device. The first information indicates a second movement path. The first access network device adjusts the network configuration based on the second movement path.

In an implementation, the first access network device receives a first movement path. The first movement path is a movement path of a terminal device that is not updated. The first access network device receives first information sent by the terminal device. The first information indicates a second movement path, and the second movement path is a movement path obtained by updating the movement path of the terminal device.

Specifically, the first information may be carried in a terminal device information response message (UEInfomationResponse). The first information may alternatively be a flight path report.

Specifically, that the first access network device adjusts the network configuration based on the second movement path may be: The first access network device monitors a plurality of terminal devices based on the second movement path of the terminal device, to avoid collision between the terminal devices, or the first access network device adjusts a beam direction of a base station based on the second movement path of the terminal device, and so on. The network configuration that needs to be adjusted is not limited in this application, and a network configuration performed by using the second movement path in this application falls within the protection scope of this application.

According to the foregoing method, when the movement path of the terminal device changes or is updated, the terminal device may report the updated movement path in time, so that a network configuration is performed in time and accurately.

With reference to the second aspect, in some manners of the second aspect, before that the first access network device receives first information sent by the terminal device, the method further includes: The first access network device receives second information sent by the terminal device. The second information indicates that the first movement path is updated.

Specifically, the second information may be carried in a terminal device assistant message (UEAssistantInfomation) or a terminal device information response message (UEInformationResponse).

In addition, if the second movement path of the terminal device is canceled after the first access network device receives the second information sent by the terminal device, the terminal device may further indicate, to the first access network device, a movement path that needs to be executed subsequently, for example, indicate that the first movement path that is not updated continues to be executed. Alternatively, the terminal device may indicate, to the first access network device, that a flight task of the terminal device is canceled.

According to the foregoing method, when the movement path of the terminal device is updated, the terminal device may report in time indication information (namely, the second information) indicating that the movement path changes, to avoid a case in which the first access network device mistakenly determines a network configuration.

With reference to the second aspect, in some implementations of the second aspect, the method further includes: The first access network device sends third information to the terminal device. The third information indicates that the terminal device is allowed to report the second information.

Specifically, the third information may be carried in another configuration message (otherConfig).

Specifically, the second information may be spontaneously reported by the terminal device to the access network device after the movement path is updated, or may be reported based on a request of the access network device. This is not limited in this application.

Specifically, the first access network device may request, when there is a service requirement related to a network configuration, the terminal device to report the second information, or the first access network device may periodically request the terminal device to report the second information. This is not limited in this application.

According to the foregoing method, the access network device may request, as required, the terminal device to report the indication information indicating that the movement path is updated, so that the access network device does not receive the information when the terminal device does not need to report the indication information indicating that the movement path is updated, thereby reducing signaling overheads.

With reference to the second aspect, in some implementations of the second aspect, the method further includes: The first access network device sends fourth information to the terminal device. The fourth information is used to request the terminal device to send the first information, and the first information is determined based on the fourth information.

Specifically, the fourth information may be carried in another configuration message (otherConfig) or a terminal device information request message (UEInformationRequest).

Specifically, the first information may be spontaneously reported by the terminal device to the access network device after the movement path is updated, or may be reported based on a request of the access network device. This is not limited in this application.

Specifically, the first access network device may request, when there is a service requirement related to a network configuration, the terminal device to report the first information, or the first access network device may periodically request the terminal device to report the first information. This is not limited in this application.

With reference to the second aspect, in some implementations of the second aspect, the method further includes: The first access network device sends fifth information to a second access network device. The fifth information includes the first information and/or the second information, and the second access network device is an access network device to which the terminal device is handed over.

Specifically, the fifth information may be carried in a handover request message.

According to the foregoing method, when the terminal device is handed over from the first access network device to the second access network device, the first access network device includes the received first information and/or second information in the handover request message, and sends the handover request message to the second access network device, to avoid a case in which the second access network device cannot receive in time information indicating that the movement path of the terminal device is updated.

With reference to the second aspect, in some implementations of the second aspect, that the first information indicates the second movement path specifically includes: The first information includes N bits, the second movement path includes P waypoints, and P bits in the N bits are in one-to-one correspondence with the P waypoints; and the first information may indicate the second movement path by using the N bits.

Specifically, the first movement path includes M waypoints, each of the M waypoints corresponds to one bit, at least one bit in the N bits is a first value, a bit other than the at least one bit in the N bits is a second value, the at least one bit is determined based on the P waypoints and the M waypoints, and at least one waypoint corresponding to the at least one bit changes.

Specifically, the first value may be 1, and the second value may be 0. This is not limited in this application.

According to the foregoing method, the terminal device may report, to the first access network device, a waypoint that is in the second movement path obtained through the update and that changes in comparison with that in the first movement path that is not updated, so that the first access network device can obtain the second movement path, and signaling overheads can be further reduced.

Specifically, when P is equal to M, the P waypoints are in one-to-one correspondence with the M waypoints, at least one bit that is in the P bits and that corresponds to at least one waypoint is the first value, a bit other than the at least one bit in the N bits is the second value, and the at least one waypoint is a waypoint that is in the P waypoints and that changes in comparison with the M waypoints.

Specifically, when P is less than M, a quantity of waypoints in the second movement path is reduced, a 1^{st} waypoint that is in the first movement path and that is not in the second movement path is denoted as a first waypoint, a bit corresponding to the first waypoint to a bit corresponding to an M^{th} waypoint in the first movement path are the first value, and a bit in the N bits other than the bit corresponding to the first waypoint to the bit corresponding to the M^{th} waypoint in the first movement path are the second value.

Specifically, when P is greater than M, a quantity of waypoints in the second movement path is increased, a 1^{st} waypoint that is in the second movement path and that is not in the first movement path is denoted as a second waypoint, a bit corresponding to the second waypoint to a bit corresponding to a P^{th} waypoint in the second movement path are the first value, and a bit in the N bits other than the bit corresponding to the second waypoint to the bit corresponding to the P^{th} waypoint in the second movement path are the second value.

Specifically, that the at least one waypoint changes includes at least one of the following: A waypoint location of the at least one waypoint changes, time at which the terminal device arrives at the at least one waypoint changes, an order of the at least one waypoint changes, the at least one waypoint corresponding to the at least one bit is deleted from the second movement path, the at least one waypoint corresponding to the at least one bit is added to the second movement path, and so on.

Specifically, a value of N may be a maximum value of a quantity of waypoints that can be included in the first movement path or the second movement path, and in this case, the value of N is a fixed value. Alternatively, when P is equal to M or P is less than M, a value of N may be M, and in this case, the value of N is determined based on a value of M and is variable; or when P is greater than M, a value of N may be P, and in this case, the value of N is determined based on a value of P and is also variable.

With reference to the second aspect, in some implementations of the second aspect, the first information further includes an index of one or more waypoints corresponding to a bit set to the first value, and the index is used to query information about the one or more waypoints in the first movement path.

Each bit of the first value corresponds to an index of a waypoint or information about the waypoint.

According to the foregoing method, when a bit corresponding to and indicated by a specific waypoint that is in the second movement path obtained through the update in comparison with that in the first movement path that is not updated changes, but waypoint information of the waypoint does not change, the terminal device does not need to report the waypoint information of the waypoint again, so that signaling overheads can be reduced.

With reference to the second aspect, in some implementations of the second aspect, the fourth information is further used to request the terminal device to report a part that is of the second movement path and that is different from the first movement path.

The part that is of the second movement path and that is different from the first movement path is reported, so that the second movement path obtained through the update can also be indicated to the access network device, and resource occupation can be further reduced.

With reference to the second aspect, in some implementations of the second aspect, the first movement path or the second movement path includes at least one waypoint, the waypoint indicates a movement location of the terminal device on the first movement path or the second movement path, and the fourth information includes at least one of the following information about the second movement path:
a start point, an end point, a quantity of waypoints, waypoint distribution, a waypoint interval, an acceleration status or a deceleration status at the waypoint, hovering time at the waypoint, a hovering speed at the waypoint, an average speed between the start point and the end point, a distance between the start point and the end point, quantities of waypoints corresponding to distances between different start points and end points, an average speed between two adjacent waypoints, and a distance between two adjacent waypoints.

For example, the quantities of waypoints corresponding to the distances between the different start points and end points may be as follows: When a distance between a start point and an end point is 1 kilometer, the second movement path includes at least two waypoints; or when a distance between a start point and an end point is 2 kilometers, the second movement path includes at least three waypoints. A specific corresponding value is not limited in this application.

The terminal device indicates, by including the foregoing information, the second movement path or the first movement path based on the foregoing required information. In this way, the second movement path or the first movement path reported by the terminal device is more easily and accurately identified by the access network device.

With reference to the second aspect, in some implementations of the second aspect, the first information further indicates that the second movement path is estimated or accurate.

Specifically, the first information may further indicate an estimated waypoint in at least one waypoint included in the second movement path and/or an accurate waypoint in at least one waypoint included in the second movement path.

The second movement path generated by the terminal device based on the fourth information or the sixth information may not be unique. Therefore, the terminal device may estimate a part of the second movement path. Alternatively, the second movement path generated by the terminal device based on the fourth information or the sixth information may be unique. Therefore, the terminal device indicates, to the access network device, information indicating that the second movement path is estimated or accurate. This facilitates a network configuration.

With reference to the second aspect, in some implementations of the second aspect, the second information further indicates the average speed at which the terminal device moves between the start point and the end point of the second movement path; or the second information further indicates the distance that the terminal device moves between the start point and the end point of the second movement path; or the second information further indicates the average speed at which the terminal device moves between two adjacent waypoints in the second movement path; or the second information further indicates the distance that the terminal device moves between two adjacent waypoints in the second movement path.

In addition, the second information may further indicate an emergency landing point in at least one waypoint included in a second flight path.

The foregoing information is indicated to the access network device, so that the access network device can be assisted in further determining whether the terminal device moves along a straight line or a curve, or moves in another manner.

With reference to the second aspect, in some implementations of the second aspect, the second information includes at least one of the following information:
a quantity of updated waypoints, the updated waypoint, a proportion of the updated waypoints, a quantity of waypoints where arrival time of the terminal device changes, the waypoint where arrival time of the terminal device changes, a proportion of the waypoints where the arrival time of the terminal device changes, a maximum location deviation of the terminal device arriving at the waypoint, and a maximum time deviation of the terminal device arriving at the waypoint.

Specifically, the quantity of updated waypoints is a quantity of changed waypoints as indicated by the terminal device to the first access network device. The updated waypoints are changed waypoints as indicated by the terminal device to the first access network device. The proportion of the changed waypoints may be a proportion of changed waypoints as indicated by the terminal device to the first access network device, the proportion of the changed waypoints may be a proportion of the quantity of changed waypoints to a total quantity of waypoints in the first movement path of the terminal device, or the proportion of the changed waypoints may be a proportion of the quantity of changed waypoints of the terminal device to a quantity of remaining waypoints of the terminal device during movement. The quantity of waypoints where the arrival time of the terminal device changes is a quantity of waypoints where arrival time of the terminal device changes, as indicated by the terminal device to the first access network device. The waypoints where the arrival time of the terminal device changes are waypoints where arrival time of the terminal device changes, as indicated by the terminal device to the first access network device. The proportion of the waypoints where the arrival time of the terminal device changes is a proportion of waypoints where arrival time of the terminal device changes, as indicated by the terminal device to the first access network device. The maximum location deviation of the terminal device arriving at the waypoint is a maximum deviation between a location of the changed waypoint as indicated by the terminal device to the first access network device and an original location of the waypoint. The maximum time deviation of the terminal device arriving at the waypoint is a maximum deviation between arrival time at the changed waypoint as indicated by the terminal device to the first access network device and original arrival time at the waypoint.

According to the foregoing method, the first access network device can more accurately determine, based on information provided by the terminal device, whether to indicate the terminal device to update the movement path, so that useless movement path update triggered by the first access network device can be reduced.

With reference to the second aspect, in some implementations of the second aspect, the second information further includes at least one of the following information:
a speed, a height, or a location of the terminal device when the terminal device sends the second information.

Based on the foregoing solution, the first access network device may configure corresponding threshold information based on information such as the speed, the height, or the location of the terminal device that is provided by the terminal device, so that the terminal device more accurately determines whether an updated movement path needs to be reported.

With reference to the second aspect, in some implementations of the second aspect, the method further includes: The first access network device sends seventh information to the terminal device. The seventh information includes at least one of the following information:
a first threshold of the quantity of updated waypoints, a waypoint specified by the first access network device, a second threshold of the proportion of the updated waypoints, a third threshold of the quantity of waypoints where the arrival time of the terminal device changes, the waypoint where the arrival time of the terminal device changes, a fourth threshold of the proportion of the waypoints where the arrival time of the terminal device changes, a first location deviation of the terminal device arriving at the waypoint, a first area of the waypoint at which the terminal device arrives, a first time deviation of the terminal device arriving at the waypoint, and load statuses of the first access network device in different time periods. The first area is used to limit a range of an area, of the waypoint, at which the terminal device arrives.

The first access network device sends the seventh information to the terminal device, to limit a condition for the terminal device to report that a movement path is updated. The terminal device triggers the movement path update only when determining that a movement path to be updated satisfies the seventh information, thereby reducing a frequency of updating the movement path by the terminal device and saving air interface resources.

With reference to the second aspect, in some implementations of the second aspect, the method further includes: The seventh information is sent by the first access network device after receiving the first movement path.

According to a third aspect, a communication method is provided. The method may be performed by a second access network device, or may be performed by a component (for example, a processor, a chip, or a chip system) of the second access network device, or may be implemented by a logical module or software that can implement a part or all of functions of the second access network device. The method includes: The second access network device receives fifth information of a first access network device. The fifth information includes first information and/or second information, the first information indicates a second movement path obtained by updating a first movement path of a terminal device, the second information indicates that the first movement path is updated, the second access network device is an access network device to which the terminal device is handed over, and the first access network device is an access network device used before the terminal device is handed over. If the fifth information includes the second information, the second access network device sends sixth information to the first access network device, where the sixth information is used to request the first information; and the second access network device receives the first information of the terminal device, where the first information is determined based on the sixth information.

Specifically, the fifth information may be carried in a handover request message.

Specifically, the sixth information may be included by the second access network device in a handover request acknowledge message for sending to the first access network device, and included by the first access network device in an RRC reconfiguration message for sending to the terminal device.

In addition, if the second movement path of the terminal device is canceled after the terminal device sends the second information to the first access network device or the second access network device, the terminal device may further indicate, to the first access network device or the second access network device, a movement path that needs to be executed subsequently, for example, indicate that the first movement path that is not updated continues to be executed. Alternatively, the terminal device may indicate, to the first access network device or the second access network device, that a flight task of the terminal device is canceled.

According to the foregoing method, when the terminal device is handed over from the first access network device to the second access network device, the first access network device includes the received first information and/or second information in the handover request message, and sends the handover request message to the second access network device, to avoid a case in which the second access network device cannot receive in time information indicating that the movement path of the terminal device is updated.

With reference to the third aspect, in some implementations of the third aspect, that the first information indicates the second movement path obtained by updating the first movement path of the terminal device specifically includes: The first information includes N bits, the second movement path includes P waypoints, and P bits in the N bits are in one-to-one correspondence with the P waypoints; and the first information may indicate the second movement path by using the N bits.

Specifically, the first movement path includes M waypoints, each of the M waypoints corresponds to one bit, at least one bit in the N bits is a first value, a bit other than the at least one bit in the N bits is a second value, the at least one bit is determined based on the P waypoints and the M waypoints, and at least one waypoint corresponding to the at least one bit changes.

Specifically, the first value may be 1, and the second value may be 0. This is not limited in this application.

According to the foregoing method, the terminal device may report, to the first access network device, a waypoint that is in the second movement path obtained through the update and that changes in comparison with that in the first movement path that is not updated, so that the first access network device can obtain the second movement path, and signaling overheads can be further reduced.

Specifically, when P is equal to M, the P waypoints are in one-to-one correspondence with the M waypoints, at least one bit that is in the P bits and that corresponds to at least one waypoint is the first value, a bit other than the at least one bit in the N bits is the second value, and the at least one waypoint is a waypoint that is in the P waypoints and that changes in comparison with the M waypoints.

Specifically, when P is less than M, a quantity of waypoints in the second movement path is reduced, a 1^{st} waypoint that is in the first movement path and that is not in the second movement path is denoted as a first waypoint, a bit corresponding to the first waypoint to a bit corresponding to an M^{th} waypoint in the first movement path are the first value, and a bit in the N bits other than the bit corresponding to the first waypoint to the bit corresponding to the M^{th} waypoint in the first movement path are the second value.

Specifically, when P is greater than M, a quantity of waypoints in the second movement path is increased, a 1^{st} waypoint that is in the second movement path and that is not in the first movement path is denoted as a second waypoint, a bit corresponding to the second waypoint to a bit corresponding to a P^{th} waypoint in the second movement path are the first value, and a bit in the N bits other than the bit corresponding to the second waypoint to the bit corresponding to the P^{th} waypoint in the second movement path are the second value.

Specifically, that the at least one waypoint changes includes at least one of the following: A waypoint location of the at least one waypoint changes, time at which the terminal device arrives at the at least one waypoint changes, an order of the at least one waypoint changes, the at least one waypoint corresponding to the at least one bit is deleted from the second movement path, the at least one waypoint corresponding to the at least one bit is added to the second movement path, and so on.

Specifically, a value of N may be a maximum value of a quantity of waypoints that can be included in the first movement path or the second movement path, and in this case, the value of N is a fixed value. Alternatively, when P is equal to M or P is less than M, a value of N may be M, and in this case, the value of N is determined based on a value of M and is variable; or when P is greater than M, a value of N may be P, and in this case, the value of N is determined based on a value of P and is also variable.

With reference to the third aspect, in some implementations of the third aspect, the first information further includes an index of one or more waypoints corresponding to a bit set to the first value, and the index is used to query information about the one or more waypoints in the first movement path.

Each bit of the first value corresponds to an index of a waypoint or information about the waypoint.

According to the foregoing method, when a bit corresponding to and indicated by a specific waypoint that is in the second movement path obtained through the update in comparison with that in the first movement path that is not updated changes, but waypoint information of the waypoint does not change, the terminal device does not need to report the waypoint information of the waypoint again, so that signaling overheads can be reduced.

With reference to the third aspect, in some implementations of the third aspect, the sixth information is further used to request the terminal device to report a part that is of the second movement path and that is different from the first movement path.

The part that is of the second movement path and that is different from the first movement path is reported, so that the second movement path obtained through the update can also be indicated to the access network device, and resource occupation can be further reduced.

With reference to the third aspect, in some implementations of the third aspect, the first movement path or the second movement path includes at least one waypoint, the waypoint indicates a movement location of the terminal device on the first movement path or the second movement path, and the sixth information includes at least one of the following information about the second movement path:
a start point, an end point, a quantity of waypoints, waypoint distribution, a waypoint interval, an acceleration status or a deceleration status at the waypoint, hovering time at the waypoint, a hovering speed at the waypoint, an average speed between the start point and the end point, a distance between the start point and the end point, quantities of waypoints corresponding to distances between different start points and end points, an average speed between two adjacent waypoints, and a distance between two adjacent waypoints.

For example, the quantities of waypoints corresponding to the distances between the different start points and end points may be as follows: When a distance between a start point and an end point is 1 kilometer, the second movement path includes at least two waypoints; or when a distance between a start point and an end point is 2 kilometers, the second movement path includes at least three waypoints. A specific corresponding value is not limited in this application.

The terminal device indicates, by including the foregoing information, the second movement path or the first movement path based on the foregoing required information. In this way, the second movement path or the first movement path reported by the terminal device is more easily and accurately identified by the access network device.

With reference to the third aspect, in some implementations of the third aspect, the first information further indicates that the second movement path is estimated or accurate.

Specifically, the first information may further indicate an estimated waypoint in at least one waypoint included in the second movement path and/or an accurate waypoint in at least one waypoint included in the second movement path.

The second movement path generated by the terminal device based on the sixth information may not be unique. Therefore, the terminal device may estimate a part of the second movement path. Alternatively, the second movement path generated by the terminal device based on the sixth information may be unique. Therefore, the terminal device indicates, to the access network device, information indicating that the second movement path is estimated or accurate. This facilitates a network configuration.

With reference to the third aspect, in some implementations of the third aspect, the second information further indicates the average speed at which the terminal device moves between the start point and the end point of the second movement path; or the second information further indicates the distance that the terminal device moves between the start point and the end point of the second movement path; or the second information further indicates the average speed at which the terminal device moves between two adjacent waypoints in the second movement path; or the second information further indicates the distance that the terminal device moves between two adjacent waypoints in the second movement path.

In addition, the second information may further indicate an emergency landing point in at least one waypoint included in a second flight path.

The foregoing information is indicated to the access network device, so that the access network device can be assisted in further determining whether the terminal device moves along a straight line or a curve, or moves in another manner.

With reference to the third aspect, in some implementations of the third aspect, the second information includes at least one of the following information:
a quantity of updated waypoints, the updated waypoint, a proportion of the updated waypoints, a quantity of waypoints where arrival time of the terminal device changes, the waypoint where arrival time of the terminal device changes, a proportion of the waypoints where the arrival time of the terminal device changes, a maximum location deviation of the terminal device arriving at the waypoint, and a maximum time deviation of the terminal device arriving at the waypoint.

Specifically, the quantity of updated waypoints is a quantity of changed waypoints as indicated by the terminal device to the first access network device. The updated waypoints are changed waypoints as indicated by the terminal device to the first access network device. The proportion of the changed waypoints may be a proportion of changed waypoints as indicated by the terminal device to the first access network device, the proportion of the changed waypoints may be a proportion of the quantity of changed waypoints to a total quantity of waypoints in the first movement path of the terminal device, or the proportion of the changed waypoints may be a proportion of the quantity of changed waypoints of the terminal device to a quantity of remaining waypoints of the terminal device during movement. The quantity of waypoints where the arrival time of the terminal device changes is a quantity of waypoints where arrival time of the terminal device changes, as indicated by the terminal device to the first access network device. The waypoints where the arrival time of the terminal device changes are waypoints where arrival time of the terminal device changes, as indicated by the terminal device to the first access network device. The proportion of the waypoints where the arrival time of the terminal device changes is a proportion of waypoints where arrival time of the terminal device changes, as indicated by the terminal device to the first access network device. The maximum location deviation of the terminal device arriving at the waypoint is a maximum deviation between a location of the changed waypoint as indicated by the terminal device to the first access network device and an original location of the waypoint. The maximum time deviation of the terminal device arriving at the waypoint is a maximum deviation between arrival time at the changed waypoint as indicated by the terminal device to the first access network device and original arrival time at the waypoint.

It should be understood that, for information that is indicated by the terminal device to the first access network device and that is included in the second information, after the first access network device sends the second information to the second access network device, the second access network device may identify that the information included in the second information is indicated by the terminal device to the second access network device.

According to the foregoing method, the second access network device can more accurately determine, based on information provided by the terminal device, whether to indicate the terminal device to update the movement path, so that useless movement path update triggered by the second access network device can be reduced.

With reference to the third aspect, in some implementations of the third aspect, the second information further includes at least one of the following information:
a speed, a height, or a location that is of the terminal device and that corresponds to the second information.

Based on the foregoing solution, the second access network device may configure corresponding threshold information based on information such as the speed, the height, or the location of the terminal device, so that the terminal device more accurately determines whether an updated movement path needs to be reported.

With reference to the third aspect, in some implementations of the third aspect, the method further includes: The second access network device sends seventh information to the terminal device. The seventh information includes at least one of the following information:
a first threshold of the quantity of updated waypoints, a waypoint specified by the second access network device, a second threshold of the proportion of the updated waypoints, a third threshold of the quantity of waypoints where the arrival time of the terminal device changes, the waypoint where the arrival time of the terminal device changes, a fourth threshold of the proportion of the waypoints where the arrival time of the terminal device changes, a first location deviation of the terminal device arriving at the waypoint, a first area of the waypoint at which the terminal device arrives, a first time deviation of the terminal device arriving at the waypoint, and load statuses of the second access network device in different time periods. The first area is used to limit a range of an area, of the waypoint, at which the terminal device arrives.

The second access network device sends the seventh information to the terminal device, so that a condition for the terminal device to report that a movement path is updated is limited. The terminal device triggers the movement path update only when determining that a movement path to be updated satisfies the seventh information, thereby reducing a frequency of updating the movement path by the terminal device and saving air interface resources.

With reference to the third aspect, in some implementations of the third aspect, the seventh information is sent after the second access network device receives the first movement path sent by the terminal device.

According to a fourth aspect, a communication method is provided. The method may be performed by a first access network device, or may be performed by a component (for example, a processor, a chip, or a chip system) of the first access network device, or may be implemented by a logical module or software that can implement a part or all of functions of the first access network device. A terminal device performs dual connectivity with the first access network device and a second access device, the first access network device is a master base station, and the second access network device is a secondary base station. The method includes: The first access network device receives a subscription message of the terminal device sent by a mobility management entity. The subscription message includes a subscription message of the first access network device and a subscription message of the second access network device. The first access network device determines the subscription message of the second access network device in the subscription message. The first access network device sends the subscription message of the second access network device to the second access network device.

According to the foregoing method, a case in which the second access network device cannot configure the obtained subscription message of the terminal device can be avoided.

According to a fifth aspect, a communication apparatus is provided. The apparatus includes: a processing unit, configured to move in a first time period based on a first movement path; and an interface unit, configured to send first information to a first access network device when the first movement path of a terminal device is updated, where the first information indicates a second movement path, and the second movement path is used to adjust a network configuration.

Specifically, the first information may be carried in a terminal device assistant message (UEAssistantInfomation). The first information may alternatively be a flight path report.

Specifically, that the second movement path is used to adjust a network configuration may be: monitoring a plurality of apparatuses based on the second movement path of the apparatus, to avoid collision between the apparatuses, or adjusting a beam direction of a base station based on the second movement path of the apparatus, and so on. The network configuration that needs to be adjusted is not limited in this application, and a network configuration performed by using the second movement path in this application falls within the protection scope of this application. When the movement path of the apparatus changes or is updated, the apparatus may report the updated movement path in time, so that a network configuration is performed in time and accurately.

With reference to the fifth aspect, in some implementations of the fifth aspect, before the interface unit is configured to send the first information to the first access network device, the interface unit is further configured to send second information to the first access network device, where the second information indicates that the first movement path is updated.

Specifically, the second information may be carried in a terminal device assistant message (UEAssistantInfomation) or a terminal device information response message (UEInformationResponse).

In addition, if the second movement path of the apparatus is canceled after the apparatus sends the second information to the first access network device, the apparatus may further indicate, to the first access network device, a movement path that needs to be executed subsequently, for example, indicate that the first movement path that is not updated continues to be executed. Alternatively, the apparatus may indicate, to the first access network device, that a flight task of the terminal device is canceled.

When the movement path of the apparatus is updated, the apparatus may report in time indication information (namely, the second information) indicating that the movement path changes, to avoid a case in which the first access network device mistakenly determines a network configuration.

With reference to the fifth aspect, in some implementations of the fifth aspect, the interface unit is further configured to receive third information sent by the first access network device, where the third information indicates that the apparatus is allowed to report the second information.

Specifically, the third information may be carried in another configuration message (otherConfig).

Specifically, the second information may be spontaneously reported by the apparatus to the access network device after the movement path is updated, or may be reported based on a request of the access network device. This is not limited in this application.

Specifically, the first access network device may request, when there is a service requirement related to a network configuration, the apparatus to report the second information, or the first access network device may periodically request the apparatus to report the second information. This is not limited in this application.

The access network device may request, as required, the apparatus to report the indication information indicating that the movement path is updated, so that the access network device does not receive the information when the apparatus does not need to report the indication information indicating that the movement path is updated, thereby reducing signaling overheads.

With reference to the fifth aspect, in some implementations of the fifth aspect, that the interface unit is configured to send the first information to the first access network device includes: The interface unit is configured to receive fourth information of the first access network device, where the fourth information is used to request the apparatus to send the first information. The processing unit is configured to determine the first information based on the fourth information. The interface unit is configured to send the first information to the first access network device.

Specifically, the fourth information may be carried in another configuration message (otherConfig) or a terminal device information request message (UEInformationRequest).

Specifically, the first information may be spontaneously reported by the apparatus to the access network device after the movement path is updated, or may be reported based on a request of the access network device. This is not limited in this application.

Specifically, the first access network device may request, when there is a service requirement related to a network configuration, the apparatus to report the first information, or the first access network device may periodically request the apparatus to report the first information. This is not limited in this application.

With reference to the fifth aspect, in some implementations of the fifth aspect, the interface unit is further configured to receive sixth information from a second access network device, where the sixth information is used to request the first information, and the second access network device is an access network device to which the apparatus is handed over. The processing unit sends the first information to the second access network device based on the sixth information.

Specifically, the sixth information may be included by the second access network device in a handover request acknowledge message for sending to the first access network device, and included by the first access network device in an RRC reconfiguration message for sending to the apparatus.

When the apparatus is handed over from the first access network device to the second access network device, the apparatus may also send the first information to the second access network device based on a request of the second access network device.

With reference to the fifth aspect, in some implementations of the fifth aspect, the fourth information or the sixth information is further used to request the apparatus to report a part that is of the second movement path and that is different from the first movement path.

The part that is of the second movement path and that is different from the first movement path is reported, so that the second movement path obtained through the update can also be indicated to the access network device, and resource occupation can be further reduced.

With reference to the fifth aspect, in some implementations of the fifth aspect, the first movement path or the second movement path includes at least one waypoint, the waypoint indicates a movement location of the apparatus on the first movement path or the second movement path, and the fourth information or the sixth information includes at least one of the following information about the second movement path:
a start point, an end point, a quantity of waypoints, waypoint distribution, a waypoint interval, an acceleration status or a deceleration status at the waypoint, hovering time at the waypoint, a hovering speed at the waypoint, an average speed between the start point and the end point, a distance between the start point and the end point, quantities of waypoints corresponding to distances between different start points and end points, an average speed between two adjacent waypoints, a distance between two adjacent waypoints, and the like.

For example, the quantities of waypoints corresponding to the distances between the different start points and end points may be as follows: When a distance between a start point and an end point is 1 kilometer, the second movement path includes at least two waypoints; or when a distance between a start point and an end point is 2 kilometers, the second movement path includes at least three waypoints. A specific corresponding value is not limited in this application.

The apparatus indicates, by including the foregoing information, the second movement path or the first movement path based on the foregoing required information. In this way, the second movement path or the first movement path reported by the apparatus is more easily and accurately identified by the access network device.

With reference to the fifth aspect, in some implementations of the fifth aspect, the first information further indicates that the second movement path is estimated or accurate.

Specifically, the first information may further indicate an estimated waypoint in at least one waypoint included in the second movement path and/or an accurate waypoint in at least one waypoint included in the second movement path.

The second movement path generated by the apparatus based on the fourth information or the sixth information may not be unique. Therefore, the apparatus may estimate a part of the second movement path. Alternatively, the second movement path generated by the apparatus based on the fourth information or the sixth information may be unique. Therefore, the apparatus indicates, to the access network device, information indicating that the second movement path is estimated or accurate. This facilitates a network configuration.

With reference to the fifth aspect, in some implementations of the fifth aspect, the second information further indicates the average speed at which the apparatus moves between the start point and the end point of the second movement path; or the second information further indicates the distance that the apparatus moves between the start point and the end point of the second movement path; or the second information further indicates the average speed at which the apparatus moves between two adjacent waypoints in the second movement path; or the second information further indicates the distance that the apparatus moves between two adjacent waypoints in the second movement path.

In addition, the second information may further indicate an emergency landing point in at least one waypoint included in a second flight path.

The foregoing information is indicated to the access network device, so that the access network device can be assisted in further determining whether the apparatus moves along a straight line or a curve, or moves in another manner.

The communication apparatus according to the fifth aspect is configured to perform the method provided in the first aspect. Specifically, the apparatus may include modules or units configured to perform any one of the first aspect or the possible implementations of the first aspect.

According to a sixth aspect, a communication apparatus is provided. The apparatus includes: a processing unit, configured to adjust a network configuration based on a first movement path of a terminal device; and an interface unit, configured to receive first information sent by the terminal device, where the first information indicates a second movement path. The processing unit is further configured to adjust the network configuration based on the second movement path.

Specifically, the first information may be carried in a terminal device assistant message (UEAssistantInfomation). The first information may alternatively be a flight path report.

Specifically, that the apparatus adjusts the network configuration based on the second movement path may be: The apparatus monitors a plurality of terminal devices based on the second movement path of the terminal device, to avoid collision between the terminal devices, or the apparatus adjusts a beam direction of a base station based on the second movement path of the terminal device, and so on. The network configuration that needs to be adjusted is not limited in this application, and a network configuration performed by using the second movement path in this application falls within the protection scope of this application.

Based on the foregoing apparatus, when the movement path of the terminal device changes or is updated, the terminal device may report the updated movement path in time, so that a network configuration is performed in time and accurately.

With reference to the sixth aspect, in some manners of the sixth aspect, before the interface unit is configured to receive the first information sent by the terminal device, the interface unit is further configured to receive second information sent by the terminal device, where the second information indicates that the first movement path is updated.

Specifically, the second information may be carried in a terminal device assistant message (UEAssistantInfomation) or a terminal device information response message (UEInformationResponse).

In addition, if the second movement path of the terminal device is canceled after the apparatus receives the second information sent by the terminal device, the terminal device may further indicate, to the apparatus, a movement path that needs to be executed subsequently, for example, indicate that the first movement path that is not updated continues to be executed. Alternatively, the terminal device may indicate, to the apparatus, that a flight task of the terminal device is canceled.

Based on the foregoing apparatus, when the movement path of the terminal device is updated, the terminal device may report in time indication information (namely, the second information) indicating that the movement path changes, to avoid a case in which the apparatus mistakenly determines a network configuration.

With reference to the sixth aspect, in some implementations of the sixth aspect, the interface unit is further configured to send third information to the terminal device, where the third information indicates that the terminal device is allowed to report the second information.

Specifically, the third information may be carried in another configuration message (otherConfig).

Specifically, the second information may be spontaneously reported by the terminal device to the apparatus after the movement path is updated, or may be reported based on a request of the apparatus. This is not limited in this application.

Specifically, the apparatus may request, when there is a service requirement related to a network configuration, the terminal device to report the second information, or the apparatus may periodically request the terminal device to report the second information. This is not limited in this application.

The apparatus may request, as required, the terminal device to report the indication information indicating that the movement path is updated, so that the apparatus does not receive the information when the terminal device does not need to report the indication information indicating that the movement path is updated, thereby reducing signaling overheads.

With reference to the sixth aspect, in some implementations of the sixth aspect, the interface unit is further configured to send fourth information to the terminal device, where the fourth information is used to request the terminal device to send the first information, and the first information is determined based on the fourth information.

Specifically, the fourth information may be carried in another configuration message (otherConfig) or a terminal device information request message (UEInformationRequest).

Specifically, the first information may be spontaneously reported by the terminal device to the apparatus after the movement path is updated, or may be reported based on a request of the apparatus. This is not limited in this application.

Specifically, the apparatus may request, when there is a service requirement related to a network configuration, the terminal device to report the first information, or the apparatus may periodically request the terminal device to report the first information. This is not limited in this application.

With reference to the sixth aspect, in some implementations of the sixth aspect, the interface unit is further configured to send fifth information to a second access network device, where the fifth information includes the first information and/or the second information, and the second access network device is an access network device to which the terminal device is handed over.

Specifically, the fifth information may be carried in a handover request message.

Based on the foregoing apparatus, when the terminal device is handed over from the apparatus to the second access network device, the apparatus includes the received first information and/or second information in the handover request message, and sends the handover request message to the second access network device, to avoid a case in which the second access network device cannot receive in time information indicating that the movement path of the terminal device is updated.

With reference to the sixth aspect, in some implementations of the sixth aspect, the fourth information is further used to request the terminal device to report a part that is of the second movement path and that is different from the first movement path.

The part that is of the second movement path and that is different from the first movement path is reported, so that the second movement path obtained through the update can also be indicated to the apparatus, and resource occupation can be further reduced.

With reference to the sixth aspect, in some implementations of the sixth aspect, the first movement path or the second movement path includes at least one waypoint, the waypoint indicates a movement location of the terminal device on the first movement path or the second movement path, and the fourth information includes at least one of the following information about the second movement path:
a start point, an end point, a quantity of waypoints, waypoint distribution, a waypoint interval, an acceleration status or a deceleration status at the waypoint, hovering time at the waypoint, a hovering speed at the waypoint, an average speed between the start point and the end point, a distance between the start point and the end point, quantities of waypoints corresponding to distances between different start points and end points, an average speed between two adjacent waypoints, and a distance between two adjacent waypoints.

For example, the quantities of waypoints corresponding to the distances between the different start points and end points may be as follows: When a distance between a start point and an end point is 1 kilometer, the second movement path includes at least two waypoints; or when a distance between a start point and an end point is 2 kilometers, the second movement path includes at least three waypoints. A specific corresponding value is not limited in this application.

The terminal device indicates, by including the foregoing information, the second movement path or the first movement path based on the foregoing required information. In this way, the second movement path or the first movement path reported by the terminal device is more easily and accurately identified by the apparatus.

With reference to the sixth aspect, in some implementations of the sixth aspect, the first information further indicates that the second movement path is estimated or accurate.

Specifically, the first information may further indicate an estimated waypoint in at least one waypoint included in the second movement path and/or an accurate waypoint in at least one waypoint included in the second movement path.

The second movement path generated by the terminal device based on the fourth information or the sixth information may not be unique. Therefore, the terminal device may estimate a part of the second movement path. Alternatively, the second movement path generated by the terminal device based on the fourth information or the sixth information may be unique. Therefore, the terminal device indicates, to the apparatus, information indicating that the second movement path is estimated or accurate. This facilitates a network configuration.

With reference to the sixth aspect, in some implementations of the sixth aspect, the second information further indicates the average speed at which the terminal device moves between the start point and the end point of the second movement path; or the second information further indicates the distance that the terminal device moves between the start point and the end point of the second movement path; or the second information further indicates the average speed at which the terminal device moves between two adjacent waypoints in the second movement path; or the second information further indicates the distance that the terminal device moves between two adjacent waypoints in the second movement path.

In addition, the second information may further indicate an emergency landing point in at least one waypoint included in a second flight path.

The foregoing information is indicated to the apparatus, so that the apparatus can be assisted in further determining whether the terminal device moves along a straight line or a curve, or moves in another manner.

The communication apparatus according to the sixth aspect is configured to perform the method provided in the second aspect. Specifically, the apparatus may include modules or units configured to perform any one of the second aspect or the possible implementations of the second aspect.

According to a seventh aspect, a communication apparatus is provided. The apparatus includes: an interface unit, configured to receive fifth information of a first access network device, where the fifth information includes first information and/or second information, the first information indicates a second movement path obtained by updating a first movement path of a terminal device, the second information indicates that the first movement path is updated, the apparatus is an access network device to which the terminal device is handed over, and the first access network device is an access network device used before the terminal device is handed over. If the fifth information includes the second information, the interface unit is further configured to send sixth information to the first access network device, where the sixth information is used to request the first information; and the interface unit is further configured to receive the first information of the terminal device, where the first information is determined based on the sixth information.

Specifically, the fifth information may be carried in a handover request message.

Specifically, the sixth information may be included by the apparatus in a handover request acknowledge message for sending to the first access network device, and included by the first access network device in an RRC reconfiguration message for sending to the terminal device.

In addition, if the second movement path of the terminal device is canceled after the terminal device sends the second information to the first access network device or the apparatus, the terminal device may further indicate, to the first access network device or the apparatus, a movement path that needs to be executed subsequently, for example, indicate that the first movement path that is not updated continues to be executed. Alternatively, the terminal device may indicate, to the first access network device or the apparatus, that a flight task of the terminal device is canceled.

Based on the foregoing apparatus, when the terminal device is handed over from the first access network device to the apparatus, the first access network device includes the received first information and/or second information in the handover request message, and sends the handover request message to the apparatus, to avoid a case in which the apparatus cannot receive in time information indicating that the movement path of the terminal device is updated.

With reference to the seventh aspect, in some implementations of the seventh aspect, the sixth information is further used to request the terminal device to report a part that is of the second movement path and that is different from the first movement path.

The part that is of the second movement path and that is different from the first movement path is reported, so that the second movement path obtained through the update can also be indicated to the apparatus, and resource occupation can be further reduced.

With reference to the seventh aspect, in some implementations of the seventh aspect, the first movement path or the second movement path includes at least one waypoint, the waypoint indicates a movement location of the terminal device on the first movement path or the second movement path, and the sixth information includes at least one of the following information about the second movement path:
a start point, an end point, a quantity of waypoints, waypoint distribution, a waypoint interval, an acceleration status or a deceleration status at the waypoint, hovering time at the waypoint, a hovering speed at the waypoint, an average speed between the start point and the end point, a distance between the start point and the end point, quantities of waypoints corresponding to distances between different start points and end points, an average speed between two adjacent waypoints, and a distance between two adjacent waypoints.

For example, the quantities of waypoints corresponding to the distances between the different start points and end points may be as follows: When a distance between a start point and an end point is 1 kilometer, the second movement path includes at least two waypoints; or when a distance between a start point and an end point is 2 kilometers, the second movement path includes at least three waypoints. A specific corresponding value is not limited in this application.

The terminal device indicates, by including the foregoing information, the second movement path or the first movement path based on the foregoing required information. In this way, the second movement path or the first movement path reported by the terminal device is more easily and accurately identified by the apparatus.

With reference to the seventh aspect, in some implementations of the seventh aspect, the first information further indicates that the second movement path is estimated or accurate.

Specifically, the first information may further indicate an estimated waypoint in at least one waypoint included in the second movement path and/or an accurate waypoint in at least one waypoint included in the second movement path.

The second movement path generated by the terminal device based on the sixth information may not be unique. Therefore, the terminal device may estimate a part of the second movement path. Alternatively, the second movement path generated by the terminal device based on the sixth information may be unique. Therefore, the terminal device indicates, to the apparatus, information indicating that the second movement path is estimated or accurate. This facilitates a network configuration.

With reference to the seventh aspect, in some implementations of the seventh aspect, the second information further indicates the average speed at which the terminal device moves between the start point and the end point of the second movement path; or the second information further indicates the distance that the terminal device moves between the start point and the end point of the second movement path; or the second information further indicates the average speed at which the terminal device moves between two adjacent waypoints in the second movement path; or the second information further indicates the distance that the terminal device moves between two adjacent waypoints in the second movement path.

In addition, the second information may further indicate an emergency landing point in at least two waypoint included in a second flight path.

The foregoing information is indicated to the apparatus, so that the apparatus can be assisted in further determining whether the terminal device moves along a straight line or a curve, or moves in another manner.

The communication apparatus according to the seventh aspect is configured to perform the method provided in the third aspect. Specifically, the apparatus may include modules or units configured to perform any one of the third aspect or the possible implementations of the third aspect.

According to an eighth aspect, a communication apparatus is provided. A terminal device performs dual connectivity with the apparatus and a second access network device, the apparatus is a master base station, and the second access network device is a secondary base station. The apparatus includes: an interface unit, configured to receive a subscription message of the terminal device sent by a mobility management entity, where the subscription message includes a subscription message of the apparatus and a subscription message of the second access network device; and a processing unit, configured to determine the subscription message of the second access network device in the subscription message. The interface unit is further configured to send the subscription message of the second access network device to the second access network device.

Based on the foregoing apparatus, a case in which the second access network device cannot configure the obtained subscription message of the terminal device can be avoided.

According to a ninth aspect, a communication apparatus is provided. The apparatus may be a terminal device, or may be a component (for example, a processor, a chip, or a chip system) of a terminal device, or may be a logical module or software that can implement a part or all of functions of a terminal device. The apparatus has a function of implementing the first aspect and the possible implementations of the first aspect. The function may be implemented by hardware, or may be implemented by hardware executing corresponding software. The hardware or the software includes one or more modules corresponding to the function.

In a possible design, the apparatus includes an interface unit and a processing unit. The interface unit may be at least one of a transceiver, a receiver, and a transmitter. The interface unit may include a radio frequency circuit or an antenna. The processing unit may be a processor. Optionally, the apparatus may further include a storage unit, and the storage unit may be, for example, a memory. When the apparatus includes the storage unit, the storage unit is configured to store a program or instructions. The processing unit is connected to the storage unit, and the processing unit may execute the program or the instructions stored in the storage unit or instructions from another source, to enable the apparatus to perform the communication method according to the first aspect and the possible implementations of the first aspect. In this design, the apparatus may be a terminal device.

In another possible design, when the apparatus is a chip, the chip includes an interface unit and a processing unit. The interface unit may be, for example, an input/output interface, a pin, or a circuit, on the chip. The processing unit may be, for example, a processor. The processing unit may execute instructions, to enable the chip in a terminal device to perform the communication method according to any one of the first aspect and the possible implementations of the first aspect. Optionally, the processing unit may execute instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a tenth aspect, a communication apparatus is provided. The apparatus may be a first access network device, a component (for example, a processor, a chip, or a chip system) of a first access network device, or a logical module or software that can implement a part or all of functions of a first access network device. The apparatus has a function of implementing the second aspect, the fourth aspect, and the possible implementations of the second aspect and the fourth aspect. The function may be implemented by hardware, or may be implemented by hardware executing corresponding software. The hardware or software includes one or more modules corresponding to the function.

In a possible design, the apparatus includes: an interface unit. Optionally, the apparatus further includes a processing unit. The interface unit may be, for example, at least one of a transceiver, a receiver, and a transmitter. The interface unit may include a radio frequency circuit or an antenna. The processing unit may be a processor.

Optionally, the apparatus may further include a storage unit, and the storage unit may be, for example, a memory. When the apparatus includes the storage unit, the storage unit is configured to store a program or instructions. The processing unit is connected to the storage unit, and the processing unit may execute the program or the instructions stored in the storage unit or instructions from another source, to enable the apparatus to perform the method according to any one of the second aspect, the fourth aspect, or the second aspect and the fourth aspect.

In another possible design, when the apparatus is a chip, the chip includes: an interface unit. Optionally, the chip further includes a processing unit. The interface unit may be, for example, an input/output interface, a pin, or a circuit, on the chip. The processing unit may be, for example, a processor. The processing module may execute a program or instructions, to enable the chip in the first access network device to perform the communication method according to any one of the second aspect, the fourth aspect, and the possible implementations of the second aspect and the fourth aspect.

Optionally, the processing unit may execute instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to an eleventh aspect, a communication apparatus is provided. The apparatus may be a second access network device, or may be a component (for example, a processor, a chip, or a chip system) of a second access network device, or may be a logical module or software that can implement a part or all of functions of a second access network device. The apparatus has a function of implementing the third aspect and the possible implementations of the third aspect. The function may be implemented by hardware, or may be implemented by hardware executing corresponding software. The hardware or software includes one or more modules corresponding to the function.

In a possible design, the apparatus includes: an interface unit. Optionally, the apparatus further includes a processing unit. The interface unit may be, for example, at least one of a transceiver, a receiver, and a transmitter. The interface unit may include a radio frequency circuit or an antenna. The processing unit may be a processor.

Optionally, the apparatus may further include a storage unit, and the storage unit may be, for example, a memory. When the apparatus includes the storage unit, the storage unit is configured to store a program or instructions. The processing unit is connected to the storage unit, and the processing unit may execute the program or the instructions stored in the storage unit or instructions from another source, to enable the apparatus to perform the method according to the third aspect or any implementation of the third aspect.

In another possible design, when the apparatus is a chip, the chip includes: an interface unit. Optionally, the chip further includes a processing unit. The interface unit may be, for example, an input/output interface, a pin, or a circuit, on the chip. The processing unit may be, for example, a processor. The processing module may execute a program or instructions, to enable the chip in the second access network device to perform the communication method according to any one of the third aspect and the possible implementations of the third aspect.

Optionally, the processing unit may execute instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a twelfth aspect, a computer storage medium is provided. The computer storage medium stores program code. The program code indicates instructions of performing the method according to any one of the first aspect, the second aspect, the third aspect, the fourth aspect, and the possible implementations of the first aspect, the second aspect, the third aspect, and the fourth aspect.

According to a twelfth aspect, a computer program product including computer instructions or computer code is provided. When the computer program product runs on a computer, the computer is enabled to perform the method according to any one of the first aspect, the second aspect, the third aspect, the fourth aspect, and the possible implementations of the first aspect, the second aspect, the third aspect, and the fourth aspect.

According to a thirteenth aspect, a communication system is provided. The communication system includes an apparatus that has a function of implementing the methods and the possible designs of the first aspect, an apparatus that has a function of implementing the methods and the possible designs of the second aspect, an apparatus that has a function of implementing the methods and the possible designs of the third aspect, and an apparatus that has a function of implementing the methods and the possible designs of the fourth aspect. The apparatus that has the function of implementing the methods and the possible designs of the first aspect may be a terminal device, the apparatus that has the function of implementing the methods and the possible designs of the second aspect and the apparatus that has the function of implementing the methods and the possible designs of the fourth aspect may be a first access network device, and the apparatus that has the function of implementing the methods and the possible designs of the third aspect may be a second access network device.

Specifically, for beneficial effects of other aspects, reference may be made to the beneficial effects described in the first aspect, the second aspect, the third aspect, and the fourth aspect.

Based on the foregoing technical solutions, when a movement path of a terminal device is updated, indication information indicating that the movement path is updated or an updated movement path may be reported to an access network device in time, so that the access network device can obtain in time the information indicating that the movement path is updated, thereby optimizing a network configuration.

### BRIEF DESCRIPTION OF DRAWINGS

FIG. 1 is a diagram of an application scenario according to this application;
FIG. 2 is a diagram of a network architecture according to this application;
FIG. 3 is a diagram of a method for reporting an updated flight path according to this application;
FIG. 4 is a diagram of another method for reporting an updated flight path according to this application;
FIG. 5 is a diagram of a method for reporting an updated flight path in a handover scenario according to this application;
FIG. 6 is a diagram of a network architecture of EN-DC dual connectivity according to this application;
FIG. 7 is a diagram of a method for managing a subscription message according to this application;
FIG. 8 is a block diagram of a communication apparatus according to this application; and
FIG. 9 is a block diagram of a communication apparatus according to this application.

### DESCRIPTION OF EMBODIMENTS

In this application, "at least one (item)" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

It should be noted that names of messages between network elements, names of parameters in the messages, or the like in the following embodiments of this application are merely examples, and there may be other names in a specific implementation. This is not specifically limited in embodiments of this application.

The following describes technical solutions of embodiments of this application with reference to accompanying drawings.

The technical solutions in embodiments of this application are applicable to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), an evolved UMTS terrestrial radio access network (evolved UMTS terrestrial radio access network, E-UTRAN), a worldwide interoperability for microwave access (worldwide interoperability for microwave access, WiMAX) communication system, a 5th generation (5th generation, 5G) system or a new radio (new radio, NR) system, a cellular system related to the 3rd generation partnership project (3rd generation partnership project, 3GPP), and a future communication system.

To address challenges of wireless broadband technologies and maintain a leading edge of a 3GPP network, the 3GPP standard group formulates a next generation mobile communication network architecture (next generation system), which is referred to as a 5G network architecture. The architecture not only supports access to a 5G core network (5G core network, 5GC) by using a wireless technology (such as LTE) defined by the 3GPP standard group, but also supports access to the 5GC by using a non-3GPP access technology through a non-3GPP interworking function (non-3GPP interworking function, N3IWF), a trusted non-3GPP gateway function (trusted non-3GPP gateway function, TNGF), a trusted WLAN interworking function (trusted WLAN interworking function, TWIF), or a next generation packet data gateway (next generation packet data gateway, NG-PDG). A core network function is divided into a user plane network element function (user plane function, UPF) and a control plane network element function (control plane function, CPF). The UPF is mainly responsible for data packet forwarding, quality of service (quality of service, QoS) control, charging information collection, and the like. The CPF is mainly responsible for user registration authentication, mobility management, and delivery of a data packet forwarding policy, a QoS control policy, and the like to the UPF, and can be further divided into an access and mobility management function (access and mobility management function, AMF) and a session management function (session management function, SMF).

A terminal device in embodiments of this application may be an uncrewed aerial vehicle (uncrewed aerial vehicle, UAV), a terminal (user equipment, UE), an access terminal, a terminal in V2X communication, a mobile station, a mobile device, a wireless communication device, or the like.

The terminal device in embodiments of this application is connected to a radio access network (radio access network, RAN) device in a wireless manner, and the radio access network device is connected to a core network device in a wireless or wired manner. The core network device and the radio access network device may be independent and different physical devices, or functions of the core network device and logical functions of the radio access network device are integrated into a same physical device, or some functions of the core network device and some functions of the radio access network device are integrated into one physical device.

For example, the core network device includes a mobility management entity (mobility management entity, MME), a broadcast multicast service center (broadcast multicast service center, BMSC), and the like, or may include a corresponding function entity in a 5G system, for example, a core network control plane (control plane, CP) or a user plane (user plane, UP) network function, for example: an SMF, an access and mobility management function AMF, a user plane function (user plane function, UPF), or the like. The core network control plane may alternatively be understood as a core network control plane function (control plane function, CPF) entity.

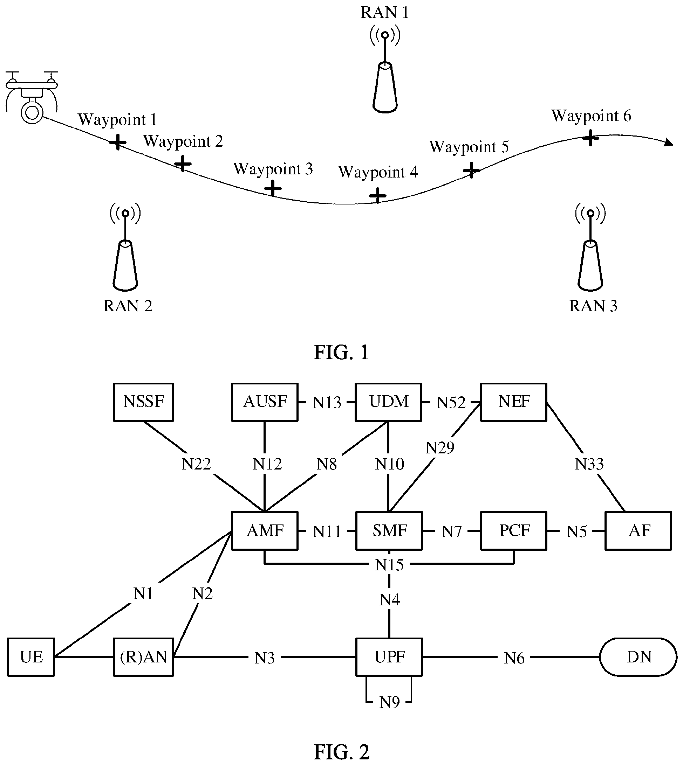

FIG. 1 is a diagram of an example of an application scenario applicable to this application according to this application. As shown in FIG. 1, this embodiment of this application is applied to a UAV flight scenario. As a new type of aircraft, a UAV has become more and more popular because of flexibility and convenience. Wide coverage of a cellular network may provide important support, such as high reliability, high security, and continuous mobility, for the UAV. The UAV mainly flies above a RAN, and is connected to the RAN through an air interface. In addition, the UAV may receive signals of a plurality of RANs. As shown in FIG. 1, the UAV may receive signals of a RAN 1, a RAN 2, and a RAN 3. A flight path of the UAV may be represented by using waypoints shown in FIG. 1. For example, the flight path of the UAV in FIG. 1 may be represented by using a waypoint 1, a waypoint 2, a waypoint 3, a waypoint 4, a waypoint 5, a waypoint 6, and the like.

FIG. 2 is a diagram of a network architecture according to an embodiment of this application. As shown in FIG. 2, the network architecture may include: a terminal device, an access management network element, a session management network element, a user plane network element, a unified data management network element, a policy control network element, an authentication server, a network slice selection function, an application network element, a (radio) access network device, a data network, a network exposure network element, and some network elements, for example, a network repository network element, that are not shown.

It should be understood that the network architecture in this embodiment of this application may be a 5th generation system (5th generation system, 5GS), and a network element in the 5GS may also be referred to as a 5G core network element.

The following separately describes the network elements in the network architecture.
1. The access management network element is mainly configured to perform mobility management, access management, and the like. In a 5G communication system, the access management network element may be an access and mobility management function (access and mobility management function, AMF), and mainly performs functions such as mobility management and access authentication/authorization. In addition, the access management network element is further responsible for transferring a user policy between a terminal device and a policy control function (policy control function, PCF) network element. The terminal device may receive non-access stratum (non-access stratum, NAS) signaling (including mobility management (mobility management, MM) signaling, session management (session management, SM) signaling) of the terminal device, and related signaling (for example, N2 (next generation network (next generation, NG) 2 interface) signaling at a base station granularity exchanged with the AMF) of the access network device, to complete a user registration procedure, SM signaling forwarding, and mobility management.
2. The session management network element is mainly configured to manage a session, allocate and manage an internet protocol (internet protocol, IP) address of a terminal device, select an endpoint that can manage a user plane function interface and a policy control and charging function interface, notify downlink data, and so on. For example, the session management network element may be an SMF network element, and is responsible for a session management function, to complete procedures such as setup, release, and update related to a PDU session.
3. The policy control network element includes a terminal subscription data management function, a policy control function, a charging policy control function, quality of service (quality of service, QoS) control, and the like, and is configured to provide a unified policy framework for guiding network behavior, and provide policy rule information for a control plane function network element (for example, the AMF or SMF network element), and so on.
   In the 5G communication system, the policy control network element may be a policy control function (policy control function, PCF) network element. The policy control network element may be responsible for user policy management, including a mobility-related policy and a PDU session-related policy, such as a QoS policy and a charging policy.
4. The network slice selection function network element is responsible for selecting a network slice for a terminal device. In the 5G communication system, the application network element may be a network slice selection function (network slice selection function, NSSF) network element. That is, the NSSF may be understood as a name of the network slice selection function network element in the 5G architecture. The network slice selection function network element mainly includes the following functions: selecting a set of network slice instances for UE, determining allowed network slice selection assistance information (network slice selection assistance information, NSSAI), determining an AMF set that can serve the UE, and the like.
5. The authentication server performs security authentication on a user. In the 5G communication system, the authentication server may be an authentication server function network element (authentication server function, AUSF), and mainly includes the following functions: an authentication server function, interacting with a UDM to obtain terminal device information, and performing an authentication-related function, for example, generating an intermediate key.
6. The unified data management network element is responsible for management of a user identifier, subscription data, and authentication data, and registration management of a serving network element of the user. In the 5G communication system, the unified data management network element may be a unified data management (unified data management, UDM), and mainly includes the following functions: unified data management, authentication credential processing in a 3GPP authentication and key agreement mechanism, user identity processing, access authorization, registration and mobility management, subscription management, SMS message management, and the like.
7. Network exposure network element: In the 5G communication system, the network exposure network element may be a network exposure function (network exposure function, NEF) network element, is mainly configured to expose a service and a capability of a 3GPP network function to an AF, and may also enable the AF to provide information for the 3GPP network function. Specifically, the NEF may be understood as a name of a capability exposure network element in the 5G architecture. The capability exposure network element mainly includes the following functions: securely exposing a service and a capability that are provided by the 3GPP network function, such as internally exposing or exposing to a third party; and converting or translating information exchanged with the AF and information exchanged with an internal network function, for example, an AF service identifier and internal 5G core network information such as a data network name (data network name, DNN), and single network slice selection assistance information (single network slice selection assistance information, S-NSSAI).
8. The network repository network element provides a storage function and a selection function of network function entity information for another core network element. In the 5G communication system, the network element may be a network function repository function network element (network function repository function, NRF), and mainly includes the following functions: a service discovery function, and maintaining an NF text of an available network function (network function, NF) instance and a service supported by the NF instance.
9. Application network element: In the 5G communication system, the application network element may be an application function (application function, AF) network element, represents an application function of a third party or an operator, is an interface for obtaining external application data in a 5G network, and is mainly configured to transfer a requirement of an application side for a network side. The AF network element mainly includes the following functions: interacting with a 3GPP core network to provide a business or a service, including interaction with an NEF, interaction with a policy architecture, and the like.
10. The user plane network element serves as an interface to the data network, and completes functions such as user plane data forwarding, session/flow level-based charging statistics collection, and bandwidth throttling, that is, packet routing and forwarding, quality of service (quality of service, QoS) handling for user plane data, and the like. In the 5G communication system, the network element may be an UPF network element.
11. (Radio) access network device (radio access network, (R)AN) device: The access network device may also be referred to as an access network device. The (R)AN can manage a radio resource, provide an access service for user equipment, and complete forwarding of user equipment data between the user equipment and a core network. The (R)AN may also be understood as a base station in a network.

For example, the access network device in embodiments of this application may be any communication device that has a wireless transceiver function and that is configured to communicate with the terminal device. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system, for example, an NR system, or one antenna panel or one group of antenna panels (including a plurality of antenna panels) of a base station in the 5G system, or may be a network node, for example, a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

12. The data network provides, for example, an operator service, an internet access service, or a third-party service, and includes a server, where the server side implements video source encoding, rendering, and the like. In the 5G communication system, the data network may be a data network (data network, DN).

The foregoing function network element may be a network element in a hardware device, a software function running on dedicated hardware, or a virtualization function instantiated on a platform (for example, a cloud platform). One or more services may be obtained through division based on the foregoing function network element. Further, a service independent of a network function may exist. In this application, an instance of the foregoing function network element, an instance of the service included in the foregoing function network element, or an instance of the service independent of the network function may be referred to as a service instance.

It should be understood that unified description is provided herein. If the foregoing network elements appear in the following architecture, the foregoing descriptions of the functions included in the network elements are also applicable. For brevity, details are not described again when the network elements appear next time.

A person skilled in the art may learn from FIG. 2 that a terminal device may access a 5GS through an access network device, the terminal device may communicate with an AMF network element through a next generation network (next generation, NG) 1 interface (N1 for short), the access network device communicates with the AMF network element through an NG 2 interface (N2 for short), the access network device communicates with a UPF network element through an NG 3 interface (N3 for short), the AMF network element communicates with an SMF network element through an NG 11 interface (N11 for short), the AMF network element communicates with a UDM network element through an NG 8 interface (N8 for short), the AMF network element communicates with an AUSF network element through an NG 12 interface (N12 for short), the AMF network element communicates with a PCF network element through an NG 15 interface (N15 for short), the SMF network element communicates with the PCF network element through an NG 7 interface (N7 for short), the SMF network element communicates with the UPF network element through an NG 4 interface (N4 for short), a NEF network element communicates with the SMF network element through an NG 29 interface (N29 for short), the UPF network element accesses a data network (data network, DN) through an NG 6 interface (N6 for short), and so on.

Certainly, a system architecture in FIG. 2 may further include another network element, for example, a network element such as a network slice selection function (network slice selection function, NSSF), a unified data repository (unified data repository, UDR), or a network repository function (network repository function, NRF), a device, or the like. This is not specifically limited.

It should be understood that a name of each network element shown in FIG. 2 is merely a name, and the name constitutes no limitation on a function of the network element. In the 5G network and another future network, the network elements may alternatively have other names. This is not specifically limited in embodiments of this application. For example, in a 6G network, some or all of the network elements may still use terms in 5G, or may have other names, and so on. A unified description is provided herein. Details are not described again below.

It should be further understood that embodiments of this application are not limited to the system architecture shown in FIG. 2. For example, a communication system to which this application is applicable may include more or fewer network elements or devices. The devices or the network elements in FIG. 2 may be hardware, or may be software obtained through function division or a combination of the hardware and the software. The devices or the network elements in FIG. 2 may communicate with each other through another device or network element.

In addition, the "network element" in this specification may also be referred to as a network function instance (network function instance), a network function (network function, NF), a device, an apparatus, a module, or the like. This is not particularly limited in this application.

In embodiments of this application, the technical solutions of this application are described in detail by using a UAV as an example of a terminal device. However, the terminal device in this application is not limited to the UAV, and another terminal device that can implement the technical solutions of this application also falls within the protection scope of this application.

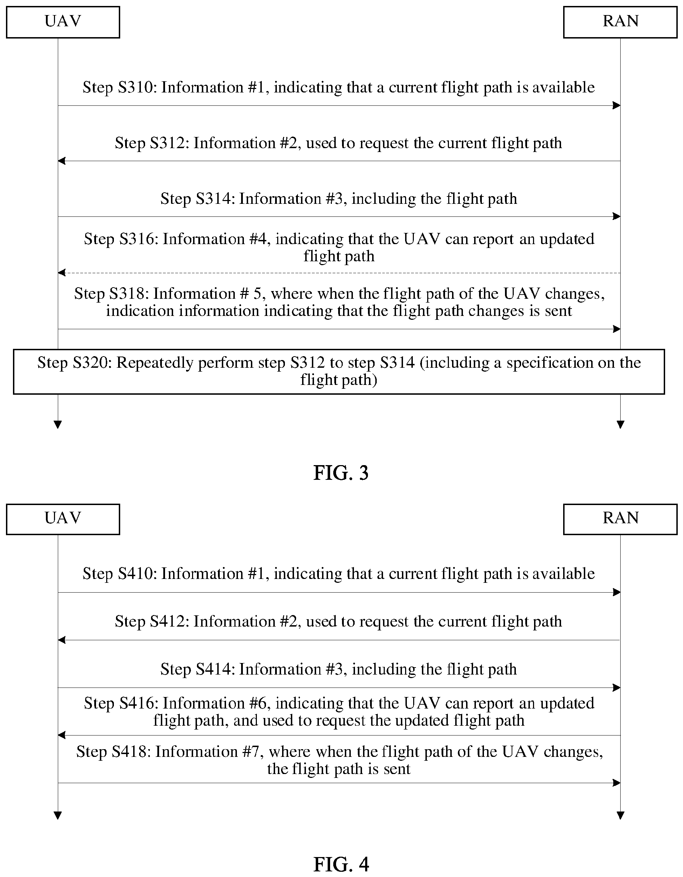

When executing a corresponding task, for example, performing power network inspection, the UAV may fly along a fixed path. Usually, when performing radio resource control (radio resource control, RRC) setup, RRC reestablishment, RRC reconfiguration, or the like with a RAN, the UAV includes, in an RRC setup complete (RRCSetupComplete) message, an RRC resume complete (RRCResumeComplete) message, an RRC reconfiguration complete (RRCReconfigurationComplete) message in a RAN handover scenario, an RRC reestablishment complete (RRCReestablishmentComplete) message, or the like, indication information indicating that information about a current flight path is available (flightPathInfoAvailable). If a flight path of the UAV changes or is updated in a flight process, information indicating that the flight path changes or is updated cannot be reported to the RAN in time, and consequently, a decision-making error of the RAN may be caused. Therefore, this application provides a method in which a UAV can report an updated flight path in time, as shown in FIG. 3.

Specifically, in the following, that a flight path changes, varies, is updated, or the like is represented, in a unified manner, as that the flight path is updated.

Step S310: The UAV sends information #1 to a RAN. Correspondingly, the RAN receives the information #1.

Specifically, the RAN may be an example of a first access network device.

Specifically, the information #1 indicates, to the RAN, that a current flight path of the UAV is available; or the information #1 indicates that information that is about a current flight path of the UAV and that is stored in the RAN is available (flightPathInfoAvailable); or the information #1 indicates, to the RAN, that a flight path of the UAV does not change or is not updated.

Specifically, the flight path may be an example of a movement path, and a movement path of a terminal device is not limited to being the flight path in this application.

Specifically, the information #1 may be carried in an RRC setup complete (RRCSetupComplete) message, an RRC resume complete (RRCResumeComplete) message, an RRC reconfiguration complete (RRCReconfigurationComplete) message, or an RRC reestablishment complete (RRCReestablishmentComplete) message for sending.

Step S312: The RAN sends information #2 to the UAV. Correspondingly, the UAV receives the information #2.

Specifically, the information #2 is used to request the UAV to report the current flight path. For example, the current flight path may be denoted as a flight path #1, and the flight path #1 may be an example of a first movement path.

Specifically, the information #2 may be a UE information request message (UEInformationRequest), or the information #1 may be a flight path request message (flightPathInfoReq).

Step S314: The UAV sends information #3 to the RAN. Correspondingly, the RAN receives the information #3.

Specifically, the information #3 may include the information about the current flight path of the UAV.

Specifically, the information #3 may be a UE information response message (UEInformationResponse), or the information #3 may be a flight path report message (flightPathInfoReport).

Specifically, the information about the flight path may alternatively be a flight path report.

Optionally, in step S316, the RAN sends information #4 to the UAV. Correspondingly, the UAV receives the information #4.

Specifically, the information #4 may be an example of third information.

Specifically, the information #4 indicates that the UAV may indicate that the updated flight path is available, that is, report information #5.

Specifically, the information #4 may be sent by the RAN by using another configuration message (otherConfig).

Step S318: The UAV sends the information #5 to the RAN when the current flight path of the UAV is updated. Specifically, the RAN receives the information #5.

For example, the updated flight path may be denoted as a flight path #2, and the flight path #2 may be an example of a second movement path.

Specifically, the information #5 may be an example of second information.

Specifically, the information #5 indicates that the flight path of the UAV has been updated, or the information #5 indicates, to the RAN, that the updated flight path is available. Alternatively, the information #5 further indicates an average speed at which the UAV moves between a start point and an end point of the flight path #2; or the information #5 further indicates a distance that the UAV moves between a start point and an end point of the flight path #2; or the information #5 further indicates an average speed at which the UAV moves between two adjacent waypoints in the flight path #2; or the information #5 further indicates a distance that the UAV moves between two adjacent waypoints in the flight path #2; and so on.

Specifically, the information #5 may be included by the UAV in UE assistant information (UEAssistantInformation) for sending.

It should be understood that the information #5 may be sent based on the information #4, or may be spontaneously reported by the UAV. This is not limited in this application.

Optionally, if the flight path #2 of the UAV is canceled after the UAV sends the information #5 to the RAN, the UAV may further indicate, to the RAN, a flight path that needs to be executed subsequently, for example, indicate that the flight path #1 that is not updated continues to be executed. Alternatively, the UAV may indicate, to the RAN, that a flight task of the UAV is canceled.

In a possible implementation, the information #5 may further include at least one of the following information #1:
a quantity of changed waypoints, the changed waypoint, a proportion of the changed waypoints, a quantity of waypoints where arrival time of the UAV changes, the waypoint where arrival time of the UAV changes, a proportion of the waypoints where the arrival time of the UAV changes, a maximum location deviation of the UAV arriving at the waypoint, a maximum time deviation of the UAV arriving at the waypoint, and the like.

Specifically, the quantity of changed waypoints is a quantity of changed waypoints as indicated by the UAV to the RAN. The changed waypoints are changed waypoints as indicated by the UAV to the RAN. The proportion of the changed waypoints is a proportion of changed waypoints as indicated by the UAV to the RAN, the proportion of the changed waypoints may be a proportion of the quantity of changed waypoints to a total quantity of waypoints in the flight path #1 of the UAV, or the proportion of the changed waypoints may be a proportion of the quantity of changed waypoints of the UAV to a quantity of remaining waypoints of the UAV during flight. The quantity of waypoints where arrival time of the UAV changes is a quantity of waypoints where arrival time of the UAV changes, as indicated by the UAV to the RAN. The waypoints where the arrival time of the UAV changes are waypoints where arrival time of the UAV changes, as indicated by the UAV to the RAN. The proportion of the waypoints where the arrival time of the UAV changes is a proportion of waypoints where arrival time of the UAV changes, as indicated by the UAV to the RAN. The maximum location deviation of the UAV arriving at the waypoint is a maximum deviation between a location of the changed waypoint as indicated by the UAV to the RAN and an original location of the waypoint. The maximum time deviation of the UAV arriving at the waypoint is a maximum deviation between arrival time at the changed waypoint as indicated by the UAV to the RAN and original arrival time at the waypoint.

In addition, the information #5 may further include at least one of the following information #2:
a speed, a height, a location, or the like of the UAV when the UAV sends the at least one of the information #1 in the information #5.

The RAN may determine, based on the information #5, whether to indicate the UAV to update the flight path.

Further, the RAN may configure a plurality of sets of information #8 based on the information #2 in the information #5. For example, when a height that is of the UAV and that corresponds to the information #2 in the information #5 reported by the UAV is 100 m, the RAN configures, for the UAV, a set of information #8 corresponding to the height 100 m of the UAV; or when a height that is of the UAV and that corresponds to the information #2 in the information #5 reported by the UAV is 200 m, the RAN configures, for the UAV, a set of information #8 corresponding to the height 200 m of the UAV. The plurality of sets of information #8 configured by the RAN may be included in same configuration information, or may be included in different configuration information. The information #8 is described in detail below.

In addition, the information #5 may be carried in another message, for example, the RRC reconfiguration complete message.

In another possible implementation, after receiving the information #3, the RAN may send information #8 to the UAV.

Specifically, the information #8 may be referred to as flight path update configuration information, and may be carried in an RRC reconfiguration message or separate signaling. This is not limited in this application. The information #8 may be an example of seventh information.

The information #8 may include information in at least one of the following three aspects.
(1) First aspect: The information is information about a limitation on a quantity of changed waypoints.
   (i) The quantity of changed waypoints does not exceed a first threshold.

Specifically, the first threshold may be set to 3, and when the quantity of changed waypoints of the UAV is 4, the UAV triggers reporting of the information #3. For example, a quantity of waypoints in the flight path #1 of the UAV is 20, and there are still 10 remaining waypoints of the UAV during flight. The first threshold may be a limitation on the quantity of waypoints in the flight path #1, or may be a limitation on a quantity of remaining waypoints of the UAV during flight. This is not limited in this application.

That is, when the quantity of changed waypoints of the UAV does not exceed the first threshold, the UAV does not trigger reporting of the flight path #2 obtained through the update; or when the quantity of changed waypoints of the UAV exceeds the first threshold, the UAV triggers reporting of the flight path #2 obtained through the update.

(ii) A proportion of the changed waypoints does not exceed a second threshold.

Specifically, the second threshold may be set to 10%, and when the proportion of the changed waypoints is 15%, the UAV triggers reporting of the information #3. The proportion of the changed waypoints may be a proportion of the quantity of changed waypoints to a total quantity of waypoints in the flight path #1 of the UAV, or the proportion of the changed waypoints may be a proportion of the quantity of changed waypoints of the UAV to the quantity of remaining waypoints of the UAV during flight. This is not limited in this application.

That is, when the proportion of the changed waypoints does not exceed the second threshold, the UAV does not trigger reporting of the flight path #2 obtained through the update; or when the proportion of the changed waypoints exceeds the second threshold, the UAV triggers reporting of the flight path #2 obtained through the update.

(iii) A waypoint is specified.

The RAN specifies some of waypoints in the flight path #1 of the UAV. When a part or all of the waypoints specified by the RAN change, the UAV triggers reporting of the information #3. For example, the quantity of waypoints in the flight path #1 of the UAV is 20, and the RAN specifies a waypoint 1, a waypoint 3, a waypoint 7, and a waypoint 10 in the 20 waypoints in the flight path #1. When a part or all of the waypoint 1, the waypoint 3, the waypoint 7, and the waypoint 10 change, the UAV triggers reporting of the information #3. The waypoint specified by the RAN is a waypoint that the RAN is interested in.

That is, when the part or all of the waypoints specified by the RAN do not change, the UAV does not trigger reporting of the flight path #2 obtained through the update; or when the part or all of the waypoints specified by the RAN change, the UAV triggers reporting of the flight path #2 obtained through the update.

(2) Second aspect: The information is information about a limitation on a location of a changed waypoint.
(i) A location, of a waypoint, at which the UAV arrives does not exceed a first location deviation.

Specifically, the first location deviation may be set to 50 meters (m). When a deviation between the location, of the waypoint, at which the UAV arrives and an original location of the waypoint is 60 meters, the UAV triggers reporting of the information #3.

Specifically, for a quantity of changed waypoints, refer to the information about the limitation on the quantity of changed waypoints in the first aspect. Details are not described herein again.

(ii) The location, of the waypoint, at which the UAV arrives does not exceed a first area.

Specifically, the RAN may indicate the first area to the UAV. When the location, of the waypoint, at which the UAV arrives exceeds the first area, the UAV triggers reporting of the information #3.

Specifically, for the quantity of changed waypoints, refer to the information about the limitation on the quantity of changed waypoints in the first aspect. Details are not described herein again.

(3) Third aspect: The information is information about a limitation on time at which the UAV arrives at a waypoint.
(i) A quantity of waypoints where arrival time of the UAV changes does not exceed a third threshold.

Specifically, the third threshold may be set to 3, and when the quantity of waypoints where the arrival time of the UAV changes is 4, the UAV triggers reporting of the information #3. For example, the quantity of waypoints in the flight path #1 of the UAV is 20, and there are still 10 remaining waypoints of the UAV during flight. The third threshold may be a limitation on a quantity of waypoints, in the flight path #1, where arrival time of the UAV changes, or may be a limitation on a quantity of waypoints, in the remaining waypoints, where arrival time of the UAV during flight changes. This is not limited in this application.

That is, when the quantity of waypoints where the arrival time of the UAV changes does not exceed the third threshold, the UAV does not trigger reporting of the flight path #2 obtained through the update; or when the quantity of waypoints where the arrival time of the UAV changes exceeds the third threshold, the UAV triggers reporting of the flight path #2 obtained through the update.

Specifically, the quantity of waypoints where the arrival time of the UAV changes may be the same as or different from the quantity of changed waypoints in the first aspect. This is not limited in this application.

Specifically, for a quantity of changed waypoints, refer to the information about the limitation on the quantity of changed waypoints in the first aspect, and/or for a location of the changed waypoint, refer to the information about the limitation on the location of the changed waypoint in the second aspect. Details are not described herein again.

(ii) A proportion of the waypoints where the arrival time of the UAV changes does not exceed a fourth threshold.

Specifically, the fourth threshold may be set to 10%, and when the proportion of the waypoints where the arrival time of the UAV changes is 15%, the UAV triggers reporting of the information #3. The proportion of the waypoints where the arrival time of the UAV changes may be a proportion of the quantity of waypoints where the arrival time of the UAV changes to a total quantity of waypoints in the flight path #1, or the proportion of the waypoints where the arrival time of the UAV changes may be a proportion of the quantity of waypoints where the arrival time of the UAV changes to a quantity of remaining waypoints of the UAV during flight. This is not limited in this application.

That is, when the proportion of the waypoints where the arrival time of the UAV changes does not exceed the fourth threshold, the UAV does not trigger reporting of the flight path #2 obtained through the update; or when the proportion of the waypoints where the arrival time of the UAV changes exceeds the fourth threshold, the UAV triggers reporting of the flight path #2 obtained through the update.

Specifically, for a quantity of changed waypoints, refer to the information about the limitation on the quantity of changed waypoints in the first aspect, and/or for a location of the changed waypoint, refer to the information about the limitation on the location of the changed waypoint in the second aspect. Details are not described herein again.

(iii) Time at which the UAV arrives at a specified waypoint changes.

The RAN specifies some of waypoints in the flight path #1 of the UAV. When a part or all of time corresponding to the waypoints specified by the RAN changes, the UAV triggers reporting of the information #3. For example, the quantity of waypoints in the flight path #1 of the UAV is 20, and the RAN specifies a waypoint 1, a waypoint 3, a waypoint 7, and a waypoint 10 in the 20 waypoints in the flight path #1. When a part or all of arrival time corresponding to the waypoint 1, the waypoint 3, the waypoint 7, and the waypoint 10 changes, the UAV triggers reporting of the information #3. The waypoint specified by the RAN is a waypoint that the RAN is interested in.

That is, when time at which the UAV arrives at a part or all of the waypoints specified by the RAN does not change, the UAV does not trigger reporting of the flight path #2 obtained through the update; or when time at which the UAV arrives at a part or all of the waypoints specified by the RAN changes, the UAV triggers reporting of the flight path #2 obtained through the update.

(iv) A time deviation of the UAV arriving at a waypoint does not exceed a first time deviation.

Specifically, the first time deviation may be set to 5 minutes (min). When a time deviation between time at which the UAV arrives at the waypoint and original time at which the UAV arrives at the waypoint is 6 minutes, the UAV triggers reporting of the information #3.

Specifically, for a quantity of changed waypoints, refer to the information about the limitation on the quantity of changed waypoints in the first aspect, and/or for a location of the changed waypoint, refer to the information about the limitation on the location of the changed waypoint in the second aspect. Details are not described herein again.

(v) Load statuses of the RAN in different time periods.

Specifically, the RAN may indicate the load statuses of the RAN in the different time periods to the UAV. When time at which the UAV arrives at a waypoint is in a time period of a low load status of the RAN, the UAV triggers reporting of the information #3; or when time at which the UAV arrives at a waypoint is in a time period of a high load status of the RAN, the UAV does not trigger reporting of the information #3.

In addition, the information #8 may be carried in the RRC reconfiguration message.

The RAN sends the information #8 to the UAV, so that a condition for triggering the UAV to report the flight path #2 obtained through the update can be limited, thereby avoiding frequently updating the flight path by the UAV, and saving air interface resources.

Step S320: When learning that the updated flight path of the UAV is available, the RAN repeats step S312 and step S314 described above, to obtain the information about the flight path of the UAV.

Specifically, the information #2 in step S320 may be an example of fourth information, and the information #3 in step S320 may be an example of first information.

In addition, the information #2 in step S320 may indicate the UAV to perform differential reporting. In other words, the information #2 in step S320 may indicate the UAV to report information about a flight path having a place different from that in a latest flight path.

Optionally, the UAV may independently perform differential reporting without an indication of the RAN.

The following describes in detail how the UAV performs differential reporting.

A first differential reporting manner is reporting a sequence with a fixed length.

Specifically, the length of the reported sequence may be designed as a maximum value of a quantity of waypoints. For example, based on a current requirement, a maximum value of a quantity of waypoints included in a reported flight path is 20. In this case, the length of the sequence for the differential reporting is 20. The maximum value of the quantity of waypoints is not limited in this application. The following uses an example in which the maximum value of the quantity of waypoints is 20 for descriptions.

Specifically, bits in the sequence are in one-to-one correspondence with the waypoints in the flight path. If a quantity A of waypoints in a flight path is less than a maximum value N of the quantity of waypoints, or if the quantity A of waypoints in the flight path is less than a quantity N of bits in the sequence, first A bits in the N bits in the sequence may respectively represent the A waypoints in the flight path. Optionally, last A bits in the N bits in the sequence may respectively represent the A waypoints in the flight path, or middle A bits in the N bits in the sequence may respectively represent the A waypoints in the flight path. In this application, the A bits that are in the sequence and that represent the A waypoints are not limited. The following uses an example in which the first A bits in the N bits in the sequence respectively represent the A waypoints in the flight path for descriptions.

Specifically, the first movement path includes M waypoints, and the second movement path includes P waypoints. P bits in the N bits are in one-to-one correspondence with the P waypoints. The UAV determines at least one bit based on the M waypoints and the P waypoints. The UAV sets the at least one bit to a first value, and sets a bit other than the at least one bit in the N bits to a second value.

Specifically, the first value may be 1, and the second value may be 0. This is not limited in this application.

For example, the UAV compares an updated flight path (namely, the second movement path) with a flight path (namely, the first movement path) reported last time. If a specific waypoint in the updated flight path changes, a bit that is in the sequence and that corresponds to the waypoint is set to 1; or if a specific waypoint in the updated flight path does not change, a bit that is in the sequence and that corresponds to the waypoint is set to 0.

Specifically, that a specific waypoint changes may be: A waypoint location of the waypoint changes, time at which the UAV arrives at the waypoint changes, an order in which the UAV arrives at the waypoint changes, the waypoint is deleted from the second movement path, the waypoint is added to the second movement path, and so on.

Specifically, that a specific waypoint in the updated flight path changes may be classified into the following three cases.
(1) A quantity of waypoints in the updated flight path remains unchanged in comparison with a quantity of waypoints in the flight path reported last time.

In this case, the UAV sets the bit corresponding to the changed waypoint in the updated flight path to 1, and sets a bit corresponding to an unchanged waypoint in the updated flight path to 0.

For example, the quantity of waypoints in the flight path is 10, and the UAV finds, through comparison, that a waypoint 3, a waypoint 5, and a waypoint 7 in the updated flight path change. In this case, a sequence for the UAN to perform differential reporting is shown in Table 1 below.

**Table 1**

| | | | | | | | | | |
|---|---|---|---|---|---|---|---|---|---|
| 0 | 0 | 1 | 0 | 1 | 0 | 1 | 0 | 0 | 0 |
| 0 | 0 | 0 | 0 | 0 | 0 | 0 | 0 | 0 | 0 |

Specifically, information may be designed in the following form #1. The form #1 for information design is an example. A specific information design form is not limited in this application.

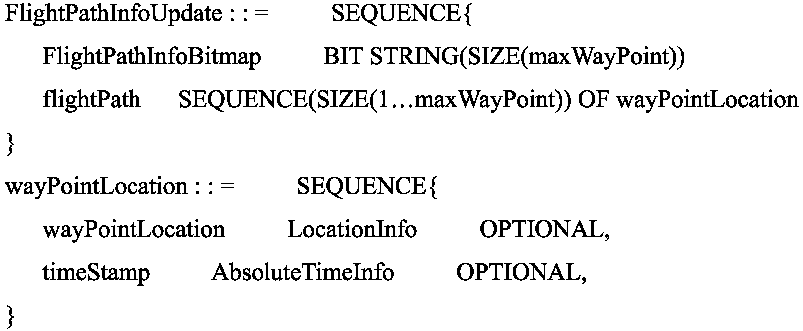

FlightPathInfoBitmap represents the sequence shown in Table 1. flightPath is a sequence, and includes a changed waypoint. For example, based on the sequence shown in the foregoing Table 1, the changed waypoints are the waypoint 3, the waypoint 5, and the waypoint 7. In this case, flightPath includes the three changed waypoints: the waypoint 3, the waypoint 5, and the waypoint 7. wayPointLocation represents information about the changed waypoint. For example, based on the sequence shown in the foregoing Table 1, the changed waypoints are the waypoint 3, the waypoint 5, and the waypoint 7. In this case, wayPointLocation includes updated waypoint information of the waypoint 3, the waypoint 5, and the waypoint 7. For example, wayPointLocation includes updated locations of the waypoint 3, the waypoint 5, and the waypoint 7 and/or updated time at which the UAV arrives at the waypoint 3, the waypoint 5, and the waypoint 7.

Optionally, if it cannot be ensured that the updated waypoint information of the waypoint 3, the waypoint 5, and the waypoint 7 included in wayPointLocation is sequentially filled in an order of the waypoint 3, the waypoint 5, and the waypoint 7, wayPointLocation includes waypoint information of five waypoints, to be specific, waypoint information of all waypoints from the waypoint 3 to the waypoint 7. The waypoint information of the waypoint 3, the waypoint 5, and the waypoint 7 is different from waypoint information of the waypoint 3, the waypoint 5, and the waypoint 7 in the flight path reported last time, and the waypoint information of the waypoint 4 and the waypoint 6 is the same as waypoint information of the waypoint 4 and the waypoint 6 in the flight path reported last time.

(2) A quantity of waypoints in the updated flight path is reduced in comparison with a quantity of waypoints in the flight path reported last time.

In this case, starting from a deleted waypoint, because a bit corresponding to a subsequent waypoint is different from a bit corresponding to a waypoint in the flight path reported last time, the UAV sets, starting from a bit corresponding to the waypoint deleted from the updated flight path, all bits corresponding to subsequent waypoints to 1.

For example, the quantity of waypoints in the flight path reported last time is 10, a waypoint 3 in the flight path reported last time is deleted, and the quantity of waypoints in the updated flight path is 9. The UAV finds, through comparison, that a waypoint 3, a waypoint 4, a waypoint 5, a waypoint 6, a waypoint 7, a waypoint 8, and a waypoint 9 in the updated flight path change. In this case, a sequence for the UAN to perform differential reporting is shown in Table 2 below.

**Table 2**

| | | | | | | | | | |
|---|---|---|---|---|---|---|---|---|---|
| 0 | 0 | 1 | 1 | 1 | 1 | 1 | 1 | 1 | 1 |
| 0 | 0 | 0 | 0 | 0 | 0 | 0 | 0 | 0 | 0 |

After the waypoint 3 in the flight path reported last time is deleted, waypoint information of a waypoint 10 in the updated flight path does not exist. Therefore, wayPointLocation in the form #1 for information design includes updated waypoint information of seven waypoints, to be specific, updated waypoint information of the waypoint 3, the waypoint 4, the waypoint 5, the waypoint 6, the waypoint 7, the waypoint 8, and the waypoint 9.

(3) A quantity of waypoints in the updated flight path is increased in comparison with a quantity of waypoints in the flight path reported last time.

In this case, starting from an added waypoint, because a bit corresponding to a subsequent waypoint is different from a bit corresponding to a waypoint in the flight path reported last time, the UAV sets, starting from a bit corresponding to the waypoint added to the updated flight path, all bits corresponding to subsequent waypoints to 1.

For example, the quantity of waypoints in the flight path reported last time is 10, a new waypoint 11 is added between a waypoint 9 and a waypoint 10 in the flight path reported last time, and the quantity of waypoints in the updated flight path is 11. The UAV finds, through comparison, that a waypoint 10 and a waypoint 11 in the updated flight path change. In this case, a sequence for the UAN to perform differential reporting is shown in Table 3 below.

**Table 3**

| | | | | | | | | | |
|---|---|---|---|---|---|---|---|---|---|
| 0 | 0 | 0 | 0 | 0 | 0 | 0 | 0 | 0 | 1 |
| 1 | 0 | 0 | 0 | 0 | 0 | 0 | 0 | 0 | 0 |

After the waypoint 11 in the flight path reported last time is added, wayPointLocation in the form #1 for information design includes updated waypoint information of two waypoints, to be specific, updated waypoint information of the waypoint 10 and the waypoint 11.

A second differential reporting manner is reporting a sequence with a variable length.

Specifically, a length N of the reported sequence is determined based on a quantity M of waypoints in a flight path reported last time or a quantity P of waypoints in an updated flight path, instead of reporting a sequence with a fixed length. A maximum length of the reported sequence is a maximum value of the quantity of waypoints. For example, based on a current requirement, a maximum value of a quantity of waypoints included in a reported flight path is 20. In this case, a maximum length of the sequence with a variable length for differential reporting is 20. The maximum value of the quantity of waypoints is not limited in this application.

Specifically, bits in the sequence are in one-to-one correspondence with the waypoints in the flight path.

For example, the UAV compares the updated flight path with the flight path reported last time. If a specific waypoint in the updated flight path changes, a bit that is in the sequence and that corresponds to the waypoint is set to 1; or if a specific waypoint in the updated flight path does not change, a bit that is in the sequence and that corresponds to the waypoint is set to 0.

Specifically, that a specific waypoint changes may be: A waypoint location of the waypoint changes, time at which the UAV arrives at the waypoint changes, an order in which the UAV arrives at the waypoint changes, the bit corresponding to the waypoint changes, and so on.

Specifically, that a specific waypoint in the updated flight path changes may be classified into the following three cases.
(1) The quantity of waypoints in the updated flight path remains unchanged in comparison with the quantity of waypoints in the flight path reported last time.

In this case, the UAV sets the bit corresponding to the changed waypoint in the updated flight path to 1, and sets a bit corresponding to an unchanged waypoint in the updated flight path to 0.

For example, the quantity of waypoints in the flight path is 10, and the UAV finds, through comparison, that a waypoint 3, a waypoint 5, and a waypoint 7 in the updated flight path change. In this case, a sequence for the UAN to perform differential reporting is shown in Table 4 below.

**Table 4**

| | | | | | | | | | |
|---|---|---|---|---|---|---|---|---|---|
| 0 | 0 | 1 | 0 | 1 | 0 | 1 | 0 | 0 | 0 |

Specifically, information may be designed in the following form #2. The form #2 for information design is an example. A specific information design form is not limited in this application.

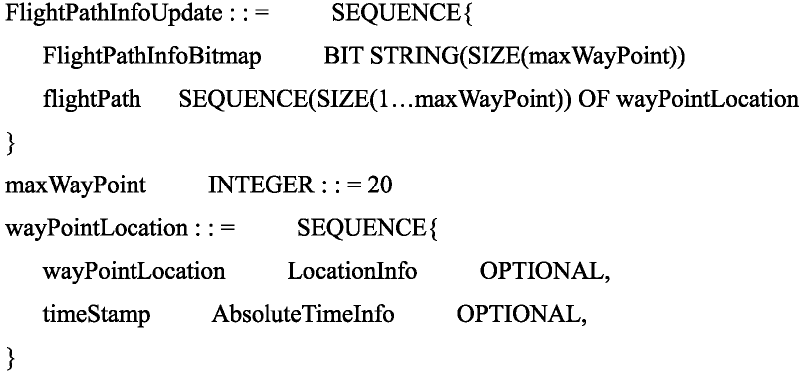

FlightPathInfoBitmap represents the sequence shown in Table 4. flightPath is a sequence, and includes a changed waypoint. For example, based on the sequence shown in the foregoing Table 4, the changed waypoints are the waypoint 3, the waypoint 5, and the waypoint 7. In this case, flightPath includes the three changed waypoints: the waypoint 3, the waypoint 5, and the waypoint 7. wayPointLocation represents information about the changed waypoint. For example, based on the sequence shown in the foregoing Table 4, the changed waypoints are the waypoint 3, the waypoint 5, and the waypoint 7. In this case, wayPointLocation includes updated waypoint information of the three waypoints, to be specific, updated waypoint information of the waypoint 3, the waypoint 5, and the waypoint 7. For example, wayPointLocation includes updated locations of the waypoint 3, the waypoint 5, and the waypoint 7 and/or updated time at which the UAV arrives at the waypoint 3, the waypoint 5, and the waypoint 7. maxWayPoint represents the maximum value of the quantity of waypoints included in the reported flight path, that is, the maximum length of the reported sequence with a variable length.

Optionally, if it cannot be ensured that the updated waypoint information of the waypoint 3, the waypoint 5, and the waypoint 7 included in wayPointLocation is sequentially filled in an order of the waypoint 3, the waypoint 5, and the waypoint 7, wayPointLocation includes waypoint information of five waypoints, to be specific, waypoint information of all waypoints from the waypoint 3 to the waypoint 7. The waypoint information of the waypoint 3, the waypoint 5, and the waypoint 7 is different from waypoint information of the waypoint 3, the waypoint 5, and the waypoint 7 in the flight path reported last time, and the waypoint information of the waypoint 4 and the waypoint 6 is the same as waypoint information of the waypoint 4 and the waypoint 6 in the flight path reported last time.

(2) The quantity of waypoints in the updated flight path is reduced in comparison with the quantity of waypoints in the flight path reported last time.

In this case, starting from a deleted waypoint, because a bit corresponding to a subsequent waypoint is different from a bit corresponding to a waypoint in the flight path reported last time, the UAV sets, starting from a bit corresponding to the waypoint deleted from the updated flight path, all bits corresponding to subsequent waypoints to 1.

For example, the quantity of waypoints in the flight path reported last time is 10, a waypoint 3 in the flight path reported last time is deleted, and the quantity of waypoints in the updated flight path is 9. The UAV finds, through comparison, that a waypoint 3, a waypoint 4, a waypoint 5, a waypoint 6, a waypoint 7, a waypoint 8, and a waypoint 9 in the updated flight path change. In this case, a sequence for the UAN to perform differential reporting is shown in Table 5 below.

**Table 5**

| | | | | | | | | | |
|---|---|---|---|---|---|---|---|---|---|
| 0 | 0 | 1 | 1 | 1 | 1 | 1 | 1 | 1 | 1 |

After the waypoint 3 in the flight path reported last time is deleted, waypoint information of a waypoint 10 in the updated flight path does not exist. Therefore, wayPointLocation in the form #1 for information design includes updated waypoint information of seven waypoints, to be specific, updated waypoint information of the waypoint 3, the waypoint 4, the waypoint 5, the waypoint 6, the waypoint 7, the waypoint 8, and the waypoint 9.

(3) The quantity of waypoints in the updated flight path is increased in comparison with the quantity of waypoints in the flight path reported last time.

In this case, starting from an added waypoint, because a bit corresponding to a subsequent waypoint is different from a bit corresponding to a waypoint in the flight path reported last time, the UAV sets, starting from a bit corresponding to the waypoint added to the updated flight path, all bits corresponding to subsequent waypoints to 1.

For example, the quantity of waypoints in the flight path reported last time is 10, a new waypoint 11 is added between a waypoint 9 and a waypoint 10 in the flight path reported last time, and the quantity of waypoints in the updated flight path is 11. The UAV finds, through comparison, that a waypoint 10 and a waypoint 11 in the updated flight path change. In this case, a sequence for the UAN to perform differential reporting is shown in Table 6 below. In this case, one bit is added to the length of the sequence reported by the UAV.

**Table 6**

| | | | | | | | | | | |
|---|---|---|---|---|---|---|---|---|---|---|
| 0 | 0 | 0 | 0 | 0 | 0 | 0 | 0 | 0 | 1 | 1 |

After the waypoint 11 in the flight path reported last time is added, flightPath in the form #2 for information design includes updated waypoint information of two waypoints, to be specific, updated waypoint information of the waypoint 10 and the waypoint 11.

Based on the foregoing two differential reporting manners, the UAV can indicate, to the RAN, the information about the changed waypoint, so that the flight path is updated, and signaling overheads can be reduced.

In addition, based on the foregoing two differential reporting manners, when waypoint information of a specific waypoint does not change, and only a bit indicating the waypoint changes, the waypoint information of the waypoint still needs to be reported again. This causes additional signaling overheads.

Therefore, a new information element (information element, IE), for example, waypointInLastReportedFlightPath in the following, is introduced in this application. waypointInLastReportedFlightPath is an index of a waypoint in the flight path reported last time, and indicates the waypoint in the flight path reported last time.

Specifically, information may be designed in the following form #3. The form #3 for information design is an example. A specific information design form is not limited in this application.

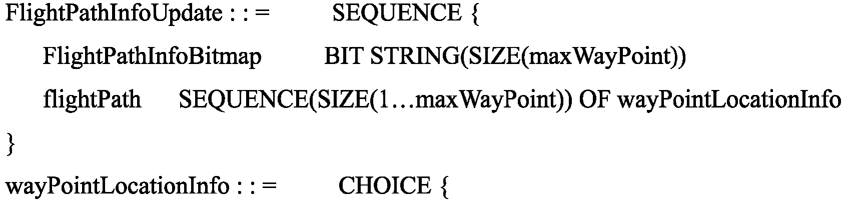

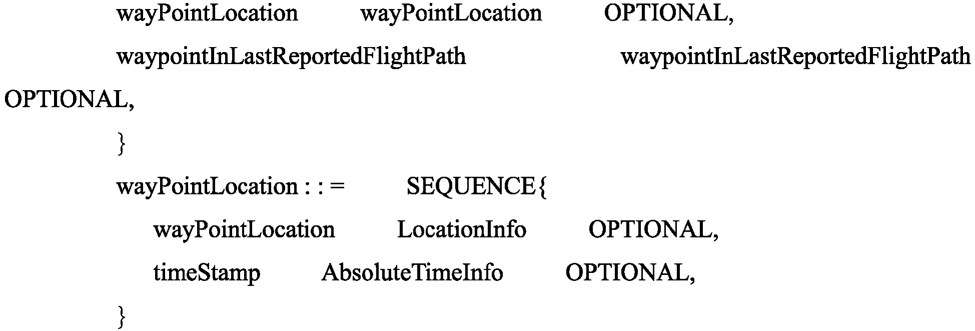

FlightPathInfoBitmap represents the sequences shown in Table 1 to Table 6. flightPath is a sequence, and includes a changed waypoint. wayPointLocation represents information about the changed waypoint. waypointInLastReportedFlightPath is the index of the waypoint in the flight path reported last time, and indicates the waypoint in the flight path reported last time. For example, if waypointInLastReportedFlightPath is set to 3, waypointInLastReportedFlightPath indicates a 3^{rd} waypoint in the flight path reported last time.

One of waypointInLastReportedFlightPath and wayPointLocation of a specific waypoint is selected for reporting.

For example, the case shown in Table 2 is used as an example for description. Table 2 shows the case in which the quantity of waypoints in the updated flight path is reduced in comparison with the quantity of waypoints in the flight path reported last time. The quantity of waypoints in the flight path reported last time is 10, the waypoint 3 in the flight path reported last time is deleted, and the quantity of waypoints in the updated flight path is 9. In this case, flightPath includes the changed waypoints: the waypoint 3, the waypoint 4, the waypoint 5, the waypoint 6, the waypoint 7, the waypoint 8, and the waypoint 9.

Specifically, wayPointLocation includes the updated waypoint information of the seven waypoints, to be specific, the updated waypoint information of the waypoint 3, the waypoint 4, the waypoint 5, the waypoint 6, the waypoint 7, the waypoint 8, and the waypoint 9, as shown in Table 7 below.

**Table 7**

| |
|---|
| Waypoint location of the waypoint 3+time at which the UAV arrives at the waypoint 3 |
| Waypoint location of the waypoint 4+time at which the UAV arrives at the waypoint 4 |
| Waypoint location of the waypoint 5+time at which the UAV arrives at the waypoint 5 |
| Waypoint location of the waypoint 6+time at which the UAV arrives at the waypoint 6 |
| Waypoint location of the waypoint 7+time at which the UAV arrives at the waypoint 7 |
| Waypoint location of the waypoint 8+time at which the UAV arrives at the waypoint 8 |
| Waypoint location of the waypoint 9+time at which the UAV arrives at the waypoint 9 |

In the foregoing Table 7, all carried information is wayPointLocation.

However, the updated waypoint information of the waypoint 3, the waypoint 4, the waypoint 5, the waypoint 6, the waypoint 7, the waypoint 8, and the waypoint 9 in the updated flight path is the same as that of the waypoint 4, the waypoint 5, the waypoint 6, the waypoint 7, the waypoint 8, the waypoint 9, and the waypoint 10 in the flight path reported last time.

Therefore, reported information may be shown in Table 8 below.

**Table 8**

| |
|---|
| 4 |
| 5 |
| 6 |
| 7 |
| 8 |
| 9 |
| 10 |

In the foregoing Table 8, all carried information is waypointInLastReportedFlightPath. The RAN obtains, based on Table 8, the waypoint information of the waypoint 4, the waypoint 5, the waypoint 6, the waypoint 7, the waypoint 8, the waypoint 9, and the waypoint 10 in the flight path reported last time, which are respectively used as the waypoint information of the changed waypoint 3, the changed waypoint 4, the changed waypoint 5, the changed waypoint 6, the changed waypoint 7, the changed waypoint 8, and the changed waypoint 9 included in flightPath, and the UAV does not need to report the waypoint information again.

According to the foregoing method, if waypoint information of a specific waypoint in an updated flight path does not change, and only a bit indicating the waypoint changes, the UAV may simply refer to waypoint information of the waypoint in a flight path previously reported, and the UAV does not need to report the waypoint information of the waypoint again, thereby reducing signaling overheads.

Specifically, the information #2 in step S320 may further include a specification of the RAN for the UAV to report the current flight path.

Specifically, the information #2 may further include at least one of the following information about a task to be executed by the UAV:
a quantity of waypoints included in a flight path, waypoint distribution, a waypoint interval, a start point and an end point of the flight path, an acceleration status or a deceleration status at a specific waypoint, hovering time or a hovering speed at the specific waypoint, whether time corresponding to the waypoint is absolute time or relative time, an average speed between the start point and the end point, a distance between the start point and the end point, quantities of waypoints corresponding to distances between different start points and end points, an average speed between two adjacent waypoints, a distance between two adjacent waypoints, and the like.

Specifically, if the UAV reports the start point of the flight path after flying over the start point, the UAV limits a current location as a start point of the task to be executed.

Specifically, the waypoint distribution may be that locations of the waypoints included in the flight path may be evenly distributed, unevenly distributed, or the like.

Specifically, when time corresponding to a start waypoint is relative time, time of a subsequent waypoint is relative time; or when time corresponding to a start waypoint is absolute time, time of a subsequent waypoint is absolute time.

In addition, the quantity of waypoints may include the start point and the end point, or may not include the start point or the end point. This is not limited in this application.

Based on the technical solution of the foregoing embodiment, the RAN can obtain, in time, indication information indicating that the flight path of the UAV is updated, to avoid a case in which the RAN mistakenly determines the flight path of the UAV. In addition, in the foregoing method, some specifications are further made for information about the flight path reported by the UAV, to avoid a case in which the RAN cannot accurately identify the flight path reported by the UAV.

This application may further provide another method in which a UAV can report an updated flight path in time, as shown in FIG. 4.

For step S410 to step S414, refer to the foregoing step S310 to step S314. Details are not described in this application.

Step S416: A RAN sends information #6 to the UAV. Correspondingly, the UAV receives the information #6.

Specifically, the information #6 may be an example of fourth information.

Specifically, the information #6 indicates that the UAV may report the updated flight path.

Specifically, the information #6 may be sent by the RAN by using another configuration message (otherConfig).

Specifically, the information #6 may further include a specification of the RAN for the UAV to report a current flight path.

Specifically, the information #2 may further include at least one of the following information about a task to be executed by the UAV:
a quantity of waypoints included in a flight path, waypoint distribution, a waypoint interval, a start point and an end point of the flight path, an acceleration status or a deceleration status at a specific waypoint, hovering time or a hovering speed at the specific waypoint, whether time corresponding to the waypoint is absolute time or relative time, an average speed between the start point and the end point, a distance between the start point and the end point, quantities of waypoints corresponding to distances between different start points and end points, an average speed between two adjacent waypoints, a distance between two adjacent waypoints, and the like.

Specifically, if the UAV reports the start point of the flight path after flying over the start point, the UAV limits a current location as a start point of the task to be executed.

Specifically, the waypoint distribution may be that locations of the waypoints included in the flight path may be evenly distributed, unevenly distributed, or the like.

Specifically, when time corresponding to a start waypoint is relative time, time of a subsequent waypoint is relative time; or when time corresponding to a start waypoint is absolute time, time of a subsequent waypoint is absolute time.

In addition, the quantity of waypoints may include the start point and the end point, or may not include the start point or the end point. This is not limited in this application.

Specifically, whether the information #6 includes the specification of the RAN for the UAV to report the current flight path may be indicated by using one bit. When the bit is 1, it indicates that the information #6 includes the specification of the RAN for the UAV to report the current flight path; or when the bit is 0, it indicates that the information #6 does not include the specification of the RAN for the UAV to report the current flight path. A quantity of bits and a specific value of the bit may be flexibly set. This is not limited in this application.

Step S418: The UAV sends information #7 to the RAN based on the information #6 when the current flight path of the UAV is updated. Specifically, the RAN receives the information #7.

Specifically, the information #7 may be an example of first information.

Specifically, the information #7 includes information indicating that the UAV updates an available flight path.

Specifically, the information #7 may be included by the UAV in UE assistant information (UEAssistantInformation) for sending.

In addition, the information #7 may indicate the UAV to perform differential reporting. In other words, the information #7 may indicate the UAV to report information about a flight path having a place different from that in a latest flight path.

For a specific differential reporting manner, refer to the foregoing descriptions. Details are not described herein again.

Based on the technical solution of the foregoing embodiment, the RAN can obtain information about an updated flight path of the UAV in time, to determine the flight path of the UAV in time. In addition, in the foregoing method, some specifications are further made for the information about the flight path reported by the UAV, to avoid a case in which the RAN cannot accurately identify the flight path reported by the UAV.

During flight of the UAV, the RAN serving the UAV may be handed over. When a source RAN has received information about a flight path of the UAV, and does not send the information about the flight path of the UAV to a target RAN during handover, the target RAN cannot obtain the information about the current flight path of the UAV, and consequently, cannot accurately control the UAV.

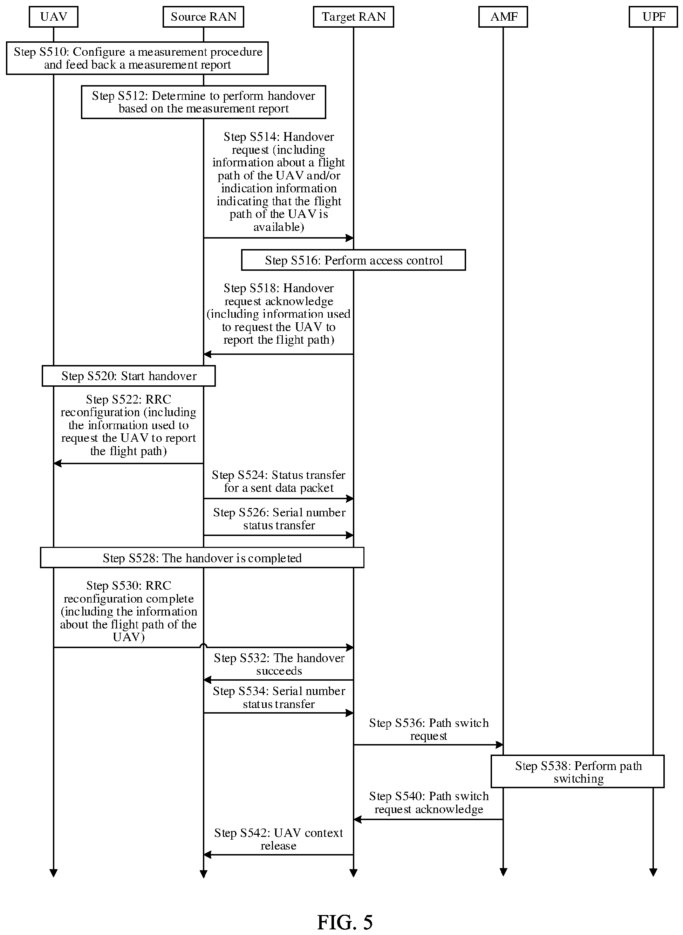

To resolve the foregoing problem, this application provides a method for updating a flight path in a RAN handover scenario, as shown in FIG. 5.

Step S510: A source RAN of a UAV configures a measurement procedure for the UAV, the UAV sends a measurement report to the source RAN, and the source RAN receives the measurement report.

Specifically, the source RAN may be an example of a first access network device.

Step S512: The source RAN of the UAV determines, based on the measurement report and the like, to hand over the RAN serving the UAV.

Step S514: The source RAN sends a handover request message to a target RAN, where the handover request message includes information (HandoverPreparationInformation) used for handover preparation of the target RAN. The target RAN receives the handover request message.

Specifically, the target RAN may be an example of a second access network device.

Specifically, the handover request message may carry fifth information.

Specifically, if the source RAN has information about a flight path of the UAV, the handover request message includes the information about the flight path of the UAV. If the source RAN has indication information indicating that a flight path of the UAV is available, but does not have information about the flight path of the UAV, the handover request message includes the indication information indicating that the flight path of the UAV is available.

In addition, if the source RAN stores the indication information indicating that the flight path of the UAV is available, and the source RAN stores at least one of the following information #1 included in information #5:
a quantity of changed waypoints, the changed waypoint, a proportion of the changed waypoints, a quantity of waypoints where arrival time of the UAV changes, the waypoint where arrival time of the UAV changes, a proportion of the waypoints where the arrival time of the UAV changes, a maximum location deviation of the UAV arriving at the waypoint, a maximum time deviation of the UAV arriving at the waypoint, and the like, but the source RAN does not have the information about the flight path of the UAV, the handover request message includes the indication information indicating that the flight path of the UAV is available and the at least one of the information #1 included in the information #5.

In addition, if the source RAN further stores at least one of the following information #2 included in the information #5:
a speed, a height, a location, or the like of the UAV when the UAV sends the at least one of the information #1 in the information #5, the handover request message includes the indication information indicating that the flight path of the UAV is available, and the at least one of the information #1 and the at least one of the information #2 that are included in the information #5.

Step S516: The target RAN performs access control.

Step S518: The target RAN prepares for handover and sends a handover request acknowledge message to the source RAN. The message carries information used by the UAV to perform handover. The source RAN receives the handover request acknowledge message.

Specifically, the handover request acknowledge message may carry sixth information.

Specifically, if the handover request message includes the indication information indicating that the flight path of the UAV is available, the handover request acknowledge message further includes the information #2, where the information #2 is used to request the UAV to report the current flight path.

Specifically, the information #2 may further include a specification of the target RAN for the UAV to report the current flight path. The information #2 may further include at least one of the following information about a task to be executed by the UAV:
a quantity of waypoints included in a flight path, waypoint distribution, a waypoint interval, a start point and an end point of the flight path, an acceleration status or a deceleration status at a specific waypoint, hovering time or a hovering speed at the specific waypoint, whether time corresponding to the waypoint is absolute time or relative time, an average speed between the start point and the end point, a distance between the start point and the end point, quantities of waypoints corresponding to distances between different start points and end points, an average speed between two adjacent waypoints, a distance between two adjacent waypoints, and the like.

Specifically, if the UAV reports the start point of the flight path after flying over the start point, the UAV limits a current location as a start point of the task to be executed.

Specifically, the waypoint distribution may be that locations of the waypoints included in the flight path may be evenly distributed, unevenly distributed, or the like.

Specifically, when time corresponding to a start waypoint is relative time, time of a subsequent waypoint is relative time; or when time corresponding to a start waypoint is absolute time, time of a subsequent waypoint is absolute time.

In addition, the quantity of waypoints may include the start point and the end point, or may not include the start point or the end point. This is not limited in this application.

Specifically, the information #2 further includes information indicating the UAV to perform differential reporting. In other words, the information #2 may indicate the UAV to report information about a flight path having a place different from that in a latest flight path.

For a specific differential reporting manner, refer to the foregoing descriptions. Details are not described herein again.

In a possible implementation, the information #2 may further include information #8.

When a flight path #2 obtained through change satisfies a limitation condition of the information #8, the UAV reports the flight path #2 obtained through the update, so that useless flight path update triggered by the target RAN is reduced as much as possible.

Step S520: The source RAN triggers or starts switching of a Uu interface between the source RAN and the UAV.

Step S522: The source RAN sends an RRC reconfiguration message to the UAV. Specifically, the RRC reconfiguration message includes identification information of a target cell, and the like.

In addition, the RRC reconfiguration message further includes the information #2.

Step S524: The source RAN sends an early status transfer message to the target RAN, where the message indicates the target RAN to clear a data packet that is stored in the target RAN and that has been sent by the source RAN.

Step S526: The source RAN sends a serial number status transfer (serial number status transfer) message to the target RAN, where the serial number status transfer message includes information such as a packet data convergence protocol (packet data convergence protocol, PDCP) serial number of the UAV. The target RAN receives the serial number status transfer message.

Step S528: The UAV is handed over to the target RAN.

Step S530: The UAV sends an RRC reconfiguration success message to the target RAN.

Specifically, the RRC reconfiguration success message may carry first information.

Specifically, the RRC reconfiguration success message may include the information about the current flight path of the UAV.

Step S532: The target RAN sends a handover success message to the source RAN.

Step S534: The source RAN sends the serial number status transfer (serial number status transfer) message to the target RAN again. The target RAN receives the serial number status transfer message.

Step S536: The target RAN sends, to an AMF network element, a path switch request message for data transmission from the UAV to the target RAN. The AMF network element receives the path switch request message.

Specifically, the path switch request message includes information related to a PDU session that needs to be switched, and the like.

Step S538: The AMF network element sends the path switch request message to a UPF network element, and completes path switching at the UPF network element.

Step S540: The AMF network element sends a path switch request acknowledge message to the target RAN.

Step S542: The target RAN sends a UAV context release message to the source RAN.

Based on the technical solution of the foregoing embodiment, it can be ensured that the target RAN obtains the information about the flight path of the UAV as early as possible, to avoid a case in which the target RAN requests the flight path of the UAV again when the UAV accesses the target RAN. This not only can reduce a delay of updating the flight path in the handover scenario, but also can reduce signaling overheads.

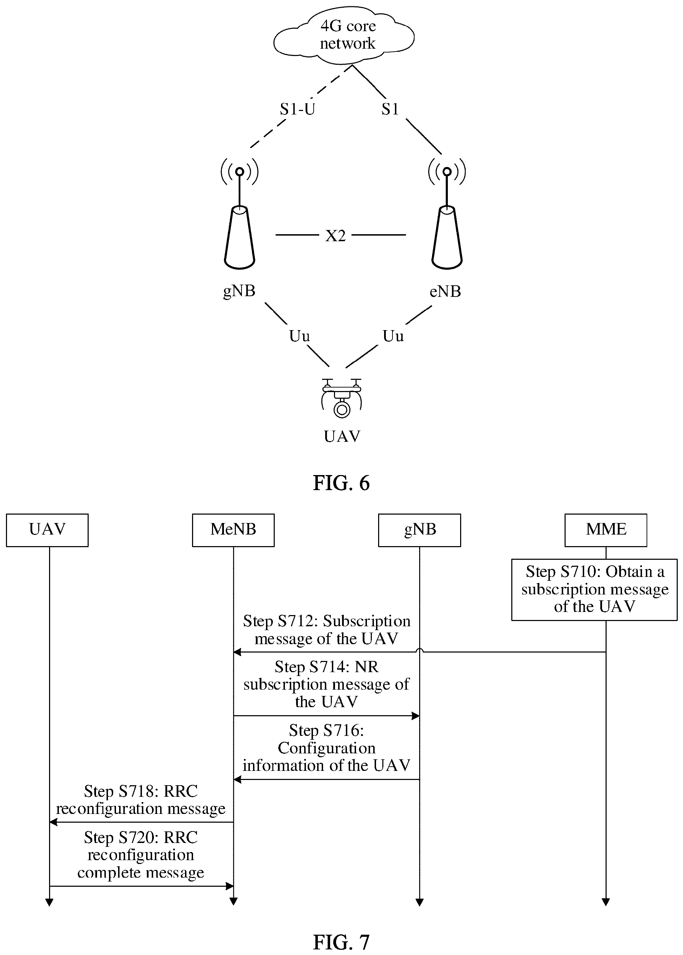

There are many intermediate phases in a deployment process from an LTE phase to an NR phase, and the deployment process further evolves to independent networking deployment of NR. Currently, a most common deployment manner in an intermediate phase is a dual connectivity (E-UTRAN-NR dual connectivity, EN-DC) architecture of a 4G base station (for example, an eNB) and a 5G base station (for example, a gNB), as shown in FIG. 6.

In this networking, no new 5G core network needs to be deployed. Only an evolved packet core (evolved packet core, EPC) needs to be upgraded, to support a 5G service. This helps accelerate deployment of the 5G service.

In the EN-DC architecture, the eNB provides management for control plane signaling, and all control plane signaling depends on the eNB for forwarding. In addition, the gNB assists in transmission of user plane data. Air interface signaling exchanged from the gNB to the UAV mainly depends on the eNB. In this case, the eNB may be considered as a router between the gNB and the UAV, to transmit control signaling.

Therefore, in the EN-DC architecture, the eNB may be considered as a master base station (master eNB, MeNB).

When the UAV accesses a network, an agreement signed with an operator is a subscription message of the UAV. The subscription message of the UAV includes authorization of the UAV and the like. A base station may determine, based on the subscription message of the UAV, whether the UAV is valid, and deliver a corresponding configuration message and the like to the UAV.

However, in the EN-DC architecture, when the UAV is connected to the base station, currently, there is no corresponding specification for management of the subscription message of the UAV, resulting in confusion in management for the UAV.

To resolve the foregoing problem, this application provides a method for managing a subscription message of a UAV, as shown in FIG. 7.

Step S710: An MME in a 4G core network obtains the subscription message of the UAV.

Step S712: The MME sends the subscription message of the UAV to a master base station MeNB. Correspondingly, the MeNB receives the subscription message of the UAV.

Specifically, the subscription message of the UAV includes an LTE subscription message of the UAV and an NR subscription message of the UAV.

Step S714: After determining, the MeNB uses the LTE subscription message of the UAV for processing, and sends the NR subscription message of the UAV to a gNB. Correspondingly, the gNB receives the NR subscription message of the UAV.

Specifically, the MeNB may send, to the gNB, the NR subscription message of the UAV by using a secondary base station (secondary gNB, SgNB) addition request message.

Step S716: The gNB determines configuration information of the UAV based on the NR subscription message of the UAV, and sends the configuration information of the UAV to the MeNB.

Specifically, the configuration information of the UAV may be sent to the MeNB by using an SgNB addition request acknowledge message.

Step S718: The MeNB sends the configuration information of the UAV to the UAV by using an RRC reconfiguration message.

Step S720: The UAV executes the RRC reconfiguration message, and feeds back an RRC reconfiguration complete message to the MeNB.

According to the foregoing method, a case in which the gNB cannot configure the obtained subscription message of the UAV can be avoided.

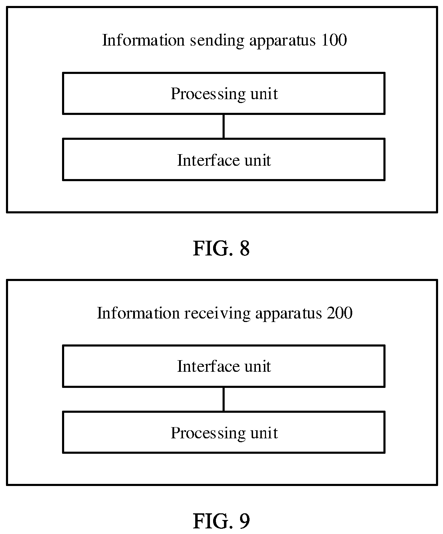

FIG. 8 is a block diagram of an information sending apparatus 100 according to an embodiment of this application. The information sending apparatus 100 may correspond to (for example, may be configured as or may be) the UAV, the RAN, the source RAN, the target RAN, the AMF, the UPF, the MME, the MeNB, and the gNB described in the embodiments of FIG. 3, FIG. 4, FIG. 5, and FIG. 7. In addition, modules or units in the information sending apparatus 100 are respectively configured to perform actions or processing processes performed by the UAV, the RAN, the source RAN, the target RAN, the AMF, the UPF, the MME, the MeNB, and the gNB described in the embodiments in FIG. 3, FIG. 4, FIG. 5, and FIG. 7. To avoid repetition, detailed descriptions thereof are omitted herein.

In this embodiment of this application, the apparatus 100 may be the UAV, the RAN, the source RAN, the target RAN, the AMF, the UPF, the MME, the MeNB, and the gNB described in the embodiments of FIG. 3, FIG. 4, FIG. 5, and FIG. 7. In this case, the apparatus 100 may include: a processor and a transceiver, where the processor is communicatively connected to the transceiver.

Optionally, the apparatus further includes a memory, where the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to send information or a signal.

In this case, an interface unit in the apparatus 100 shown in FIG. 8 may correspond to the transceiver, and a processing unit in the apparatus 100 shown in FIG. 8 may correspond to the processor.

In this embodiment of this application, the apparatus 100 may be a chip (or a chip system) installed in the UAV, the RAN, the source RAN, the target RAN, the AMF, the UPF, the MME, the MeNB, and the gNB described in the embodiments of FIG. 3, FIG. 4, FIG. 5, and FIG. 7. In this case, the apparatus 100 may include: a processor and an input/output interface. The processor may be communicatively connected to a transceiver of the UAV, the RAN, the source RAN, the target RAN, the AMF, the UPF, the MME, the MeNB, and the gNB described in the embodiments in FIG. 3, FIG. 4, FIG. 5, and FIG. 7 through the input/output interface. Optionally, the apparatus further includes a memory, where the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to send information or a signal.

In this case, an interface unit in the apparatus 100 shown in FIG. 8 may correspond to the input/output interface, and a processing unit in the apparatus 100 shown in FIG. 8 may correspond to the processor.

FIG. 9 is a block diagram of an information receiving apparatus 200 according to an embodiment of this application. The information receiving apparatus 200 may correspond to (for example, may be configured to implement) the UAV, the RAN, the source RAN, the target RAN, the AMF, the UPF, the MME, the MeNB, and the gNB described in the embodiments of FIG. 3, FIG. 4, FIG. 5, and FIG. 7. In addition, modules or units in the information receiving apparatus 200 are respectively configured to perform actions or processing processes performed by the UAV, the RAN, the source RAN, the target RAN, the AMF, the UPF, the MME, the MeNB, and the gNB described in the embodiments in FIG. 3, FIG. 4, FIG. 5, and FIG. 7. To avoid repetition, detailed descriptions thereof are omitted herein.

In this embodiment of this application, the apparatus 200 may be the UAV, the RAN, the source RAN, the target RAN, the AMF, the UPF, the MME, the MeNB, and the gNB described in the embodiments of FIG. 3, FIG. 4, FIG. 5, and FIG. 7. In this case, the apparatus 200 may include: a processor and a transceiver, where the processor is communicatively connected to the transceiver. Optionally, the apparatus further includes a memory, where the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to receive information or a signal.

In this case, an interface unit in the apparatus 200 shown in FIG. 9 may correspond to the transceiver, and a processing unit in the apparatus 200 shown in FIG. 9 may correspond to the processor.

In this embodiment of this application, the apparatus 200 may be a chip (or a chip system) installed in the UAV, the RAN, the source RAN, the target RAN, the AMF, the UPF, the MME, the MeNB, and the gNB described in the embodiments of FIG. 3, FIG. 4, FIG. 5, and FIG. 7. In this case, the apparatus 200 may include: a processor and an input/output interface. The processor may be communicatively connected to a transceiver of the UAV, the RAN, the source RAN, the target RAN, the AMF, the UPF, the MME, the MeNB, and the gNB described in the embodiments in FIG. 3, FIG. 4, FIG. 5, and FIG. 7 through the input/output interface. Optionally, the apparatus further includes a memory, where the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to receive information or a signal.

In this case, an interface unit in the apparatus 200 shown in FIG. 9 may correspond to the input interface, and a processing unit in the apparatus 200 shown in FIG. 9 may correspond to the processor.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for the particular applications, but it should not be considered that the implementation goes beyond the scope of this application.

It may be clearly understood by a person skilled in the art that, for the purpose of convenient and brief descriptions, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be at one location, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in one computer-readable storage medium. Based on such an understanding, the technical solutions of this application essentially, or the part contributing to the conventional technology, or a part of the technical solutions may be implemented in a form of a software product. The computer software product is stored in one storage medium, and includes several instructions for instructing a computer device (which may be a personal computer, a server, a network device, or the like) to perform a part or all of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
moving, by a terminal device, in a first time period based on a first movement path; and
sending, by the terminal device, first information to a first access network device when the first movement path of the terminal device is updated, wherein the first information indicates a second movement path, and the second movement path is a movement path obtained by updating the movement path of the terminal device.

2. The method according to claim 1, wherein before the sending, by the terminal device, first information to a first access network device, the method further comprises:
sending, by the terminal device, second information to the first access network device, wherein the second information indicates that the first movement path is updated.

3. The method according to claim 1 or 2, wherein the sending, by the terminal device, first information to a first access network device comprises:
receiving, by the terminal device, fourth information of the first access network device, wherein the fourth information is used to request the terminal device to send the first information;
determining, by the terminal device, the first information based on the fourth information; and
sending, by the terminal device, the first information to the first access network device.

4. The method according to any one of claims 1 to 3, wherein the first information is carried in a terminal device information response message, and the second information is carried in a terminal device assistant message or the terminal device information response message.

5. The method according to claim 3 or 4, wherein the fourth information is carried in another configuration message or a terminal device information request message.

6. The method according to any one of claims 1 to 5, wherein the method further comprises:
receiving, by the terminal device, sixth information from a second access network device, wherein the sixth information is used to request the first information, and the second access network device is an access network device to which the terminal device is handed over; and
sending, by the terminal device, the first information to the second access network device based on the sixth information.

7. The method according to any one of claims 1 to 6, wherein that the first information indicates the second movement path comprises:
the first information comprises N bits, the second movement path comprises P waypoints, and P bits of the N bits are in one-to-one correspondence with the P waypoints; and
the first information indicates the second movement path by using the N bits.

8. The method according to claim 7, wherein the first movement path comprises M waypoints, each of the M waypoints corresponds to one bit, and the method further comprises:
determining, by the terminal device, at least one bit based on the P waypoints and the M waypoints, wherein at least one waypoint corresponding to the at least one bit changes; and
setting, by the terminal device, the at least one bit to a first value, and setting a bit other than the at least one bit in the N bits to a second value.

9. The method according to claim 8, wherein that the at least one waypoint changes comprises at least one of the following:
a waypoint location of the at least one waypoint changes, time at which the terminal device arrives at the at least one waypoint changes, an order of the at least one waypoint changes, the at least one waypoint corresponding to the at least one bit is deleted from the second movement path, or the at least one waypoint corresponding to the at least one bit is added to the second movement path.

10. The method according to any one of claims 7 to 9, wherein a value of N is a maximum value of a quantity of waypoints that can be comprised in the first movement path or the second movement path.

11. The method according to any one of claims 7 to 9, wherein when P is equal to M or P is less than M, a value of N is M; or
when P is greater than M, a value of N is P.

12. The method according to any one of claims 8 to 11, wherein the first information further comprises an index of one or more waypoints corresponding to a bit set to the first value, and the index is used to query information about the one or more waypoints in the first movement path.

13. The method according to claim 12, wherein each bit set to the first value corresponds to an index of a waypoint or information about the waypoint.

14. The method according to any one of claims 3 to 13, wherein the fourth information or the sixth information is further used to request the terminal device to report a part that is of the second movement path and that is different from the first movement path.

15. The method according to any one of claims 1 to 14, wherein the first movement path or the second movement path comprises at least one waypoint, the waypoint indicates a movement location of the terminal device on the first movement path or the second movement path, and the fourth information or the sixth information comprises at least one of the following information about the second movement path:
a start point, an end point, a quantity of waypoints, waypoint distribution, a waypoint interval, an acceleration status or a deceleration status at the waypoint, hovering time at the waypoint, a hovering speed at the waypoint, an average speed between the start point and the end point, a distance between the start point and the end point, quantities of waypoints corresponding to distances between different start points and end points, an average speed between two adjacent waypoints, and a distance between two adjacent waypoints.

16. The method according to any one of claims 1 to 15, wherein the first information further indicates that the second movement path is estimated or accurate.

17. The method according to any one of claims 2 to 16, wherein the second information further indicates the average speed at which the terminal device moves between the start point and the end point of the second movement path; or the second information further indicates the distance that the terminal device moves between the start point and the end point of the second movement path; or the second information further indicates the average speed at which the terminal device moves between two adjacent waypoints in the second movement path; or the second information further indicates the distance that the terminal device moves between two adjacent waypoints in the second movement path.

18. The method according to any one of claims 2 to 17, wherein the second information comprises at least one of the following information:
a quantity of updated waypoints, the updated waypoint, a proportion of the updated waypoints, a quantity of waypoints where arrival time of the terminal device changes, the waypoint where arrival time of the terminal device changes, a proportion of the waypoints where the arrival time of the terminal device changes, a maximum location deviation of the terminal device arriving at the waypoint, and a maximum time deviation of the terminal device arriving at the waypoint.

19. The method according to claim 18, wherein the second information further comprises at least one of the following information:
a speed, a height, or a location of the terminal device when terminal device sends the second information.

20. The method according to any one of claims 1 to 19, wherein the method further comprises:
receiving, by the terminal device, seventh information from the first access network device, wherein the seventh information comprises at least one of the following information:
a first threshold of the quantity of updated waypoints, a waypoint specified by the first access network device, a second threshold of the proportion of the updated waypoints, a third threshold of the quantity of waypoints where the arrival time of the terminal device changes, the waypoint where the arrival time of the terminal device changes, a fourth threshold of the proportion of the waypoints where the arrival time of the terminal device changes, a first location deviation of the terminal device arriving at the waypoint, a first area of the waypoint at which the terminal device arrives, a first time deviation of the terminal device arriving at the waypoint, and load statuses of the first access network device in different time periods, wherein the first area is used to limit a range of an area, of the waypoint, at which the terminal device arrives.

21. The method according to claim 20, wherein the method further comprises:
sending, by the terminal device, the first movement path, wherein the seventh information is received after the terminal device sends the first movement path.

22. A communication method, wherein the method comprises:
receiving, by a first access network device, a first movement path, wherein the first movement path is a movement path of a terminal device that is not updated; and
receiving, by the first access network device, first information sent by the terminal device, wherein the first information indicates a second movement path, and the second movement path is a movement path obtained by updating the movement path of the terminal device.

23. The method according to claim 22, wherein before the receiving, by the first access network device, first information sent by the terminal device, the method further comprises:
receiving, by the first access network device, second information sent by the terminal device, wherein the second information indicates that the first movement path is updated.

24. The method according to claim 22 or 23, wherein the method further comprises:
sending, by the first access network device, fourth information to the terminal device, wherein the fourth information is used to request the terminal device to send the first information, and the first information is determined based on the fourth information.

25. The method according to any one of claims 22 to 24, wherein the first information is carried in a terminal device information response message, and the second information is carried in a terminal device assistant message or the terminal device information response message.

26. The method according to claim 24 or 25, wherein the fourth information is carried in another configuration message or a terminal device information request message.

27. The method according to any one of claims 22 to 26, wherein the method further comprises:
sending, by the first access network device, fifth information to a second access network device, wherein the fifth information comprises the first information and/or the second information, and the second access network device is an access network device to which the terminal device is handed over.

28. The method according to any one of claims 22 to 27, wherein that the first information indicates the second movement path comprises:
the first information comprises N bits, the second movement path comprises P waypoints, and P bits of the N bits are in one-to-one correspondence with the P waypoints; and
the first information indicates the second movement path by using the N bits.

29. The method according to claim 28, wherein the first movement path comprises M waypoints, each of the M waypoints corresponds to one bit, at least one bit in the N bits is a first value, a bit other than the at least one bit in the N bits is a second value, the at least one bit is determined based on the P waypoints and the M waypoints, and at least one waypoint corresponding to the at least one bit changes.

30. The method according to claim 29, wherein that the at least one waypoint changes comprises at least one of the following:
a waypoint location of the at least one waypoint changes, time at which the terminal device arrives at the at least one waypoint changes, an order of the at least one waypoint changes, the at least one waypoint corresponding to the at least one bit is deleted from the second movement path, and the at least one waypoint corresponding to the at least one bit is added to the second movement path.

31. The method according to any one of claims 28 to 30, wherein a value of N is a maximum value of a quantity of waypoints that can be comprised in the first movement path or the second movement path.

32. The method according to any one of claims 28 to 30, wherein when P is equal to M or P is less than M, a value of N is M; or
when P is greater than M, a value of N is P.

33. The method according to any one of claims 29 to 32, wherein the first information further comprises an index of one or more waypoints corresponding to a bit of the first value, and the index is used to query information about the one or more waypoints in the first movement path.

34. The method according to claim 33, wherein each bit of the first value corresponds to an index of a waypoint or information about the waypoint.

35. The method according to any one of claims 24 to 34, wherein the fourth information is further used to request the terminal device to report a part that is of the second movement path and that is different from the first movement path.

36. The method according to any one of claims 22 to 35, wherein the first movement path or the second movement path comprises at least one waypoint, the waypoint indicates a movement location of the terminal device on the first movement path or the second movement path, and the fourth information comprises at least one of the following information about the second movement path:
a start point, an end point, a quantity of waypoints, waypoint distribution, a waypoint interval, an acceleration status or a deceleration status at the waypoint, hovering time at the waypoint, a hovering speed at the waypoint, an average speed between the start point and the end point, a distance between the start point and the end point, quantities of waypoints corresponding to distances between different start points and end points, an average speed between two adjacent waypoints, and a distance between two adjacent waypoints.

37. The method according to any one of claims 22 to 36, wherein the first information further indicates that the second movement path is estimated or accurate.

38. The method according to any one of claims 23 to 37, wherein the second information further indicates the average speed at which the terminal device moves between the start point and the end point of the second movement path; or the second information further indicates the distance that the terminal device moves between the start point and the end point of the second movement path; or the second information further indicates the average speed at which the terminal device moves between two adjacent waypoints in the second movement path; or the second information further indicates the distance that the terminal device moves between two adjacent waypoints in the second movement path.

39. The method according to any one of claims 23 to 38, wherein the second information comprises at least one of the following information:
a quantity of updated waypoints, the updated waypoint, a proportion of the updated waypoints, a quantity of waypoints where arrival time of the terminal device changes, the waypoint where arrival time of the terminal device changes, a proportion of the waypoints where the arrival time of the terminal device changes, a maximum location deviation of the terminal device arriving at the waypoint, and a maximum time deviation of the terminal device arriving at the waypoint.

40. The method according to claim 39, wherein the second information further comprises at least one of the following information:
a speed, a height, or a location of the terminal device when the terminal device sends the second information.

41. The method according to any one of claims 22 to 40, wherein the method further comprises:
sending, by the first access network device, seventh information to the terminal device, wherein the seventh information comprises at least one of the following information:
a first threshold of the quantity of updated waypoints, a waypoint specified by the first access network device, a second threshold of the proportion of the updated waypoints, a third threshold of the quantity of waypoints where the arrival time of the terminal device changes, the waypoint where the arrival time of the terminal device changes, a fourth threshold of the proportion of the waypoints where the arrival time of the terminal device changes, a first location deviation of the terminal device arriving at the waypoint, a first area of the waypoint at which the terminal device arrives, a first time deviation of the terminal device arriving at the waypoint, and load statuses of the first access network device in different time periods, wherein the first area is used to limit a range of an area, of the waypoint, at which the terminal device arrives.

42. The method according to claim 41, wherein the seventh information is sent after the first access network device receives the first movement path.

43. A communication method, wherein the method comprises:
receiving, by a second access network device, fifth information of a first access network device, wherein the fifth information comprises first information and/or second information, the first information indicates a second movement path obtained by updating a first movement path of a terminal device, the second information indicates that the first movement path is updated, the second access network device is an access network device to which the terminal device is handed over, and the first access network device is an access network device used before the terminal device is handed over;
if the fifth information comprises the second information, sending, by the second access network device, sixth information to the first access network device, wherein the sixth information is used to request the first information; and
receiving, by the second access network device, the first information of the terminal device, wherein the first information is determined based on the sixth information.

44. The method according to claim 43, wherein that the first information indicates the second movement path obtained by updating the first movement path of the terminal device comprises:
the first information comprises N bits, the second movement path comprises P waypoints, and P bits in the N bits are in one-to-one correspondence with the P waypoints; and
the first information indicates the second movement path by using the N bits.

45. The method according to claim 44, wherein the first movement path comprises M waypoints, each of the M waypoints corresponds to one bit, at least one bit in the N bits is a first value, a bit other than the at least one bit in the N bits is a second value, the at least one bit is determined based on the P waypoints and the M waypoints, and at least one waypoint corresponding to the at least one bit changes.

46. The method according to claim 45, wherein that the at least one waypoint changes comprises:
a waypoint location of the at least one waypoint changes, time at which the terminal device arrives at the at least one waypoint changes, an order of the at least one waypoint changes, the at least one waypoint corresponding to the at least one bit is deleted from the second movement path, and the at least one waypoint corresponding to the at least one bit is added to the second movement path.

47. The method according to any one of claims 44 to 46, wherein a value of N is a maximum value of a quantity of waypoints that can be comprised in the first movement path or the second movement path.

48. The method according to any one of claims 44 to 46, wherein when P is equal to M or P is less than M, a value of N is M; or
when P is greater than M, a value of N is P.

49. The method according to any one of claims 45 to 48, wherein the first information further comprises an index of one or more waypoints corresponding to a bit of the first value, and the index is used to query information about the one or more waypoints in the first movement path.

50. The method according to claim 49, wherein each bit set to the first value corresponds to an index of a waypoint or information about the waypoint.

51. The method according to any one of claims 43 to 50, wherein the sixth information is further used to request the terminal device to report a part that is of the second movement path and that is different from the first movement path.

52. The method according to any one of claims 43 to 51, wherein the first movement path or the second movement path comprises at least one waypoint, the waypoint indicates a movement location of the terminal device on the first movement path or the second movement path, and the sixth information comprises at least one of the following information about the second movement path:
a start point, an end point, a quantity of waypoints, waypoint distribution, a waypoint interval, an acceleration status or a deceleration status at the waypoint, hovering time at the waypoint, a hovering speed at the waypoint, an average speed between the start point and the end point, a distance between the start point and the end point, quantities of waypoints corresponding to distances between different start points and end points, an average speed between two adjacent waypoints, and a distance between two adjacent waypoints.

53. The method according to any one of claims 43 to 52, wherein the first information further indicates that the second movement path is estimated or accurate.

54. The method according to any one of claims 43 to 53, wherein the second information further indicates the average speed at which the terminal device moves between the start point and the end point of the second movement path; or the second information further indicates the distance that the terminal device moves between the start point and the end point of the second movement path; or the second information further indicates the average speed at which the terminal device moves between two adjacent waypoints in the second movement path; or the second information further indicates the distance that the terminal device moves between two adjacent waypoints in the second movement path.

55. The method according to any one of claims 43 to 54, wherein the second information comprises at least one of the following information:
a quantity of updated waypoints, the updated waypoint, a proportion of the updated waypoints, a quantity of waypoints where arrival time of the terminal device changes, the waypoint where arrival time of the terminal device changes, a proportion of the waypoints where the arrival time of the terminal device changes, a maximum location deviation of the terminal device arriving at the waypoint, and a maximum time deviation of the terminal device arriving at the waypoint.

56. The method according to claim 55, wherein the second information further comprises at least one of the following information:
a speed, a height, or a location that is of the terminal device and that corresponds to the second information.

57. The method according to any one of claims 43 to 56, wherein the method further comprises:
sending, by the second access network device, seventh information to the terminal device, wherein the seventh information comprises at least one of the following information:
a first threshold of the quantity of updated waypoints, a waypoint specified by the second access network device, a second threshold of the proportion of the updated waypoints, a third threshold of the quantity of waypoints where the arrival time of the terminal device changes, the waypoint where the arrival time of the terminal device changes, a fourth threshold of the proportion of the waypoints where the arrival time of the terminal device changes, a first location deviation of the terminal device arriving at the waypoint, a first area of the waypoint at which the terminal device arrives, a first time deviation of the terminal device arriving at the waypoint, and load statuses of the second access network device in different time periods, wherein the first area is used to limit a range of an area, of the waypoint, at which the terminal device arrives.

58. The method according to claim 57, wherein the seventh information is sent after the second access network device receives the first movement path sent by the terminal device.

59. A communication apparatus, comprising:
a processor, wherein the processor is coupled to a memory, the memory is configured to store a program or instructions, and when the program or the instructions are executed by the processor, the apparatus is enabled to perform the communication method according to any one of claims 1 to 58.

60. A computer-readable storage medium, wherein the computer-readable storage medium stores a computer program, and when the computer program runs on a computer, the computer is enabled to perform the communication method according to any one of claims 1 to 58.

61. A computer program product, comprising computer program code, wherein when the computer program code is run, the communication method according to any one of claims 1 to 58 is implemented.
